# EUROPEAN PATENT SPECIFICATION

(11) **EP 0 487 291 B1**
(45) Date of publication and mention of the grant of the patent: **29.09.1999**
(21) Application number: 91310635.7
(22) Date of filing: 19.11.1991
(51) Int. Cl.: C08G 77/20, C08L 83/06, C08G 77/50, C08L 83/14, C09D 183/14

(54) **Photocurable silicon composition, and method of making same**
Fotohärtbare Polysiloxanzusammensetzung und Verfahren zur Herstellung
Composition de polysiloxane photodurcissable et procédé de préparation

(30) Priority: 19.11.1990 US 615200; 19.11.1990 US 615185; 19.11.1990 US 615186
(43) Date of publication of application: 27.05.1992
(73) Proprietor: LOCTITE CORPORATION, Hartford, Connecticut 06106 (US)
(72) Inventor: Chu, Hsien-Kun, Weathersfield, Connecticut 06109 (US); Cross, Robert P., West Simsbury, Connecticut 06092 (US); Crossan, David I., Hebron, Connecticut 06248 (US); Welch II, Edward K., Bristol, Connecticut 06010 (US)
(74) Representative: Marchant, James Ian

(56) References cited:
- EP-A- 0 200 828
- EP-A- 0 200 828
- GB-A- 1 072 889
- US-A- 3 035 016
- US-A- 3 584 023
- US-A- 4 845 259

## Description

### BACKGROUND OF THE INVENTION

### Field of the Invention

This invention relates generally to a photocurable silicone composition comprising an acryloxy-functional capped silicone, to a polymodal-cure resin composition comprising an acryloxy-functional capped silicone, and to a photocurable silicone gel composition and precursor hereof as well as to methods of making same.

### Description of the Related Art

In the field of silicone chemistry, a variety of silicone compounds, polymers, and formulations have been developed for applications including sealants, conformal coatings and potting materials. Among the numerous silicone systems developed to date, a wide variety of moisture-curing silicone compositions have evolved, which depend on atmospheric humidity and/or moisture present on the substrate to which the composition is applied, for their cure. Although such moisture-curing silicone systems provide good physical properties and performance when fully cured, they suffer the disadvantage that the moisture curing process is relatively slow.

In consequence, effort has been focused in recent years on silicone compositions having other curing modalities which are significantly faster than the moisture-curing process. In particular, photocurable (e.g., UV-curable) silicones have been developed which offer a fast curing speed, far superior to conventional moisture-curing silicones.

In one such UV-curing silicone system which has come into wide usage. a photocurable silicone polymer is prepared by reacting (a) an isomeric mixture of acryloxypropenyldimethylchlorosilane, comprising the isomers 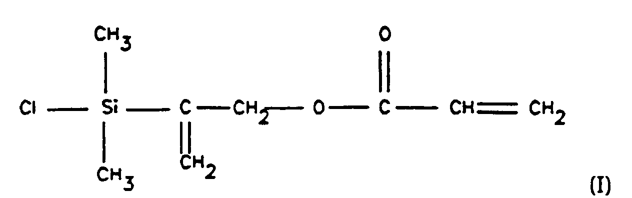 and 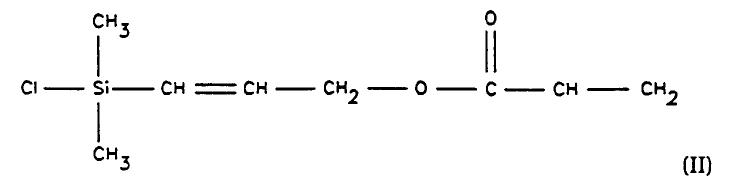 wherein the isomer (I) is present at a concentration of about 75%-80% by weight of the isomeric mixture, and isomer (II) constitutes the balance thereof, with (b) a hydroxyl-terminated dimethylsilicone fluid of suitable molecular weight, e.g., 20,000-40,000 weight average molecular weight, to yield an acrylic-functional capped silicone polymer. The acrylic-functional capped silicone polymer then is compounded with filler, stabilizer, and a suitable photoinitiator such as benzophenone, to yield a photocurable silicone composition which is very rapidly cured in exposure to UV or other suitable actinic radiation.

The acrylic-functional capper employed to prepare the photocurable silicone polymer described above is typically prepared by selectively hydrosilylating propargyl acrylate at the propargyl group with dimethylchlorosilane. Subsequently, in the endcapping of the hydroxylterminated dimethylsilicone fluid using the resulting isomeric mixture described above, hydrogen chloride is generated, necessitating the addition of a basic hydrogen chloride acceptor, e.g., an amine, to the reaction volume. The amine or other acid acceptor functions to prevent the acid from catalyzing the reversion of the dimethylsilicone fluid.

While the above photocurable silicone system functions satisfactorily in many applications and has enjoyed wide commercial usage, it nonetheless suffers from several serious problems.

First, and of utmost importance, propargyl acyrlate and its precursor. propargyl alcohol, are highly toxic, and thus require precautionary measures in handling and exposure, to ensure safety in their use.

Second, the process employed to make the acrylic-functional capper is complex and expensive. Propargyl alcohol is first esterified to make the propargyl acrylate, and the acrylate then is carefully hydrosilylated to form the acrilic-functional capper.

Third, the capping process, with a base such as an amine being employed as the hydrogen chloride acceptor, generates a base-complexed hydrochloride which is a solid. The formation of this solid complex necessitates the difficult step of filtering the solid from the viscous polymer, which adds to the cost of the process and the photocurable silicone product.

Fourth, the acrylic-functional capper comprises a constituent, viz., the isomer of formula (I) above, which as a β-oxygenated silicon compound, is readily susceptible to undergoing β-elimination reaction. For a discussion of β-elimination chemistry, see C. Eaborn. "Organosilicone Compounds", Butterworths Scientific Publications. London, 1960, pp. 137-138. Thus, the isomer (I) of the capper mixture may undergo β-elimination reaction to split off allene, thereby rendering the acrylic-functional capper unstable. Further, the resulting photocurable silicone composition comprising the photocured acrylic-functional capped silicone polymer may likewise be unstable due to the presence of the β-oxygenated silicon linkage therein.

Apart from the above-described deficiencies of conventional photocurable silicone systems, these systems when fully cured are characterized by good toughness and hardness characteristics which in many applications are a decided advantage, however in a number of sealant, potting, and conformal coating applications, it is more desirable to utilize a soft. flexible, pliable and resilient cured material. The latter characteristics may be desired, for example, in applications involving substantial differential thermal expansion characteristics, such as where the silicone material is employed as a sealant between structural elements possessing substantially different thermal conductivity and heat capacity characteristics, in end use environments of rapidly changing temperature. Another end use application where such soft, flexible, pliable, and resilient character is desired, is the use of coatings on substrates or in elements which are expandable or otherwise must accommodate deformational stresses or pressures (e.g., gasket and bushing materials in high pressure hydraulic systems). In such applications, fully capped photocurable silicone compositions are excessively hard and inelastic, and their use entails the risk or occurrence of failure of the silicone materials, with consequent adverse effect on the efficiency or utility of the structure in which such materials are employed. In such applications, a silicone possessing soft, gel-like texture and accompanying flexibility would better serve the functional performance and physical property requirements for usage of silicone materials.

Accordingly, it would be a significant advance in the art to provide a photocurable silicone composition which can be made without highly toxic reagents in a relatively simple and economic manner, does not require filtering of a viscous polymer product, and comprises a silicone polymer which is capped with an acrylic-functional capper having no β-oxygenated silicon linkages in its structure.

With respect to the photocurable silicone composition and process of making same which constitute aspects of the present invention and are more fully described hereinafter, related art to the present invention is discussed below.

"Synthesis of Organosilicon Esters of Hydrozino Carboxylic Acids", G. S. Gol'din, et al. Zhurnal Obshchei Khimii, Vol. 43, No. 4, April, 1973, pp. 781-784, discloses the synthesis of 1,3-bis[(acryloyloxy)methyl]- and 1,3-bis[(methacryloyloxy)-methyl)-1,1,3.3-tetramethlydisiloxanes by heating mixtures of chloro(chloromethyl)dimethylsilane with acrylic and methacyrlic acids in the presence of triethylamine as hydrogen chloride acceptor, with subsequent hydrolysis of the silyl ester: 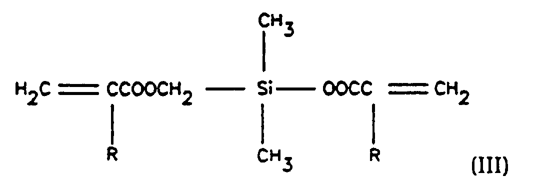 wherein R = H or CH₃.

U.S. Patent 4,845,259 to M. Arai, et al, assigned to Shin-Etsu Chemical Company, Ltd., and Shin-Etsu's Japanese Kokai Tokkyo Koho JP 0114226, JP 63179881, JP 63 185989, and European Patent Application EP 276986, describe the synthesis of a silyl acrylic acid diester of formula (III) above, by reaction of potassium or sodium salts of acrylic acid with chloromethyldimehylchlorosilane. Such synthesis, however, has the disadvantage that the acrylic acid salts employed therein are relatively expensive. In accordance with the teachings of these patents, the silyl diacrylate compound (III) is hydrolyzed to form a silanol capper of the formula: 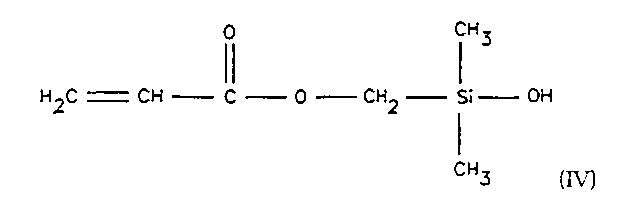 Contemporaneously, dimethylchlorosilane is reacted, in the presence of a platinum hydrosilation catalyst, with a vinyl-terminated dimethylsiloxane polymer to yield a product silicone polymer with chloro terminal groups. The silicone polymer is reacted with the silanol capper in the presence of amine to yield an acryloxy methyl-terminated polymer of the formula; 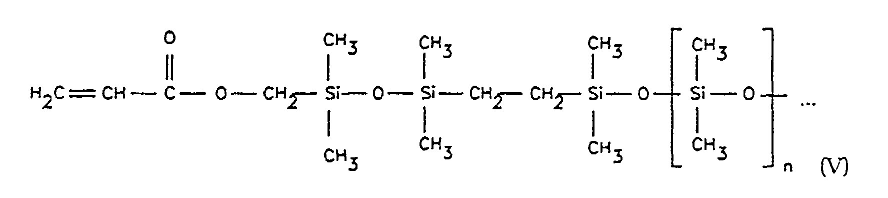 and thereafter the product is filtered to remove the concurrently formed amine hydrochloride complex therefrom.

EP 0200828 discloses a silicone composition which is UV light-curable as well as moisture-curable in character, the moisture cure serving to provide completion of cure of the silicone composition to a cross-linked polymer in shadow area not accessible to the UV radiation. The crosslinkable prepolymer of such composition includes siloxy repeating units wherein the silicon atom substituents are hydrolysable organic groups, or dialkylamino/hydrocarbyl substituent pairs (see page 3, lines 18-32 of D5). (Meth)acryloxyalkylsiloxy and (meth)acryloxyalkenylsiloxy terminal groups are present in the resin, as described at page 5, lines 1-15.

The silicones described in EP 0200828 are formed from silanol-terminated silicones which are condensed with excess quantity of the acrylic-functional silane whose formula is set out at page 8, lines 10-13 thereof.

US Patent 4,563,529 to G.A. Gornowich, *et al,* describes UV-curable acrylofunctional silicones which are formed by reaction of aminoalkyl or diaminoalkyl silicones with isocyanato acrylates.

Other relevant acrylic functional silicone references include: US Patent 4,503,208 (preparation of acrylate and 2-alkyl acrylate silicones which are curable by UV exposure, heat, or anaerobic conditions, by hydrosilation of an acrylate or 2-alkyl acrylate ester of an acetylene alcohol with silicon hydride functional silicones); US Patent 4,575,546 (radiation-curable silicone polymers with a plurality of acrylic groups clustered at or near the chain ends thereof); US Patent 4,575,545 (same); US Patent 4,675,346 (silicone resin with terminal acrylic groups and intermediate region free of acrylic groups, formulated with fumed silica filler and photoinitiator, and curable by UV radiation); US Patent 4,504,529 (graft polymers having α-alkyl acylate functionality, formed as a reaction product of a silicon hydride grafting agent with at least one α-alkyl acrylate group, and an aliphatically unsaturated polymer, e.g. a polyorganosiloxane); and US Patent 4,655,147 (methacrylated siloxanes prepared by hydrosilation of beta(allyloxy)ethylmethacrylate using a silicon hydride functional siloxane).

Photocurable siloxane rubber compositions are described in Japanese Kokai Tokkyo Koho JP 01 301708, and European Patent Application 0 240 162 A2 describes liquid polyorganosiloxane compositions that cure by a hydrosilation reaction to yield optically transparent elastomers.

GB 1072889 discloses new silyl diacrylate compounds such as dimethyl(methacryloxymethyl)-methacryloxysilane (Example 2) and a process for their production. It also discloses that the new compounds of the invention may also serve as intermediate products for modifying silanol functional organopolysiloxanes with acyl groups or for producing acyloxymethyl-substituted organopolysiloxanes by cohydrolysis with chloro-, alkoxy- or other acryloxy-silanes, no further disclosure of such reaction is given in GB 1072889.

Accordingly, it is an object of the present invention to provide a photocurable silicone composition which may be synthesized using relatively low cost, relatively available materials, which is relatively simple in synthesis procedure, and which avoids the necessity of filtering a highly viscous silicone polymer product to remove by-products therefrom.

It is another object of the invention to provide a photocurable silicone composition in which the silicone polymer is free of β-oxygenated silicon linkages, and whose synthesis can be carried out without highly toxic reactant materials.

Other objects and advantages will be more fully apparent from the ensuing disclosure and appended claims.

### SUMMARY OF THE INVENTION

In one aspect, the present invention relates to the preparation of an acryloxy-functional capped silicone formed as a non hydrolysis reaction product of:
(i) a silyl diacrylate compound of the formula: 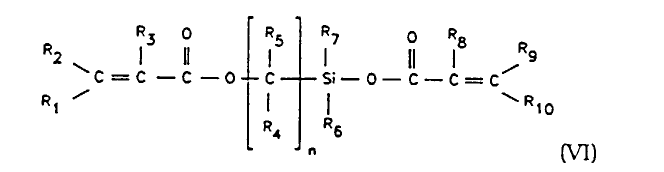 wherein:
   R₁, R₂, R₃, R₄, R₅, R₆, R₇, R₈, R₉, and R₁₀ are independently selected from hydrogen, halo, and C₁-C₈ alkyl or phenyl radicals; and n is an integer having a value of from 1 to 4; and
(ii) a silicone having at least one functionality which is reactive with said silyl diacrylate compound to yield said capped silicone, wherein said capping moieties have the formula: 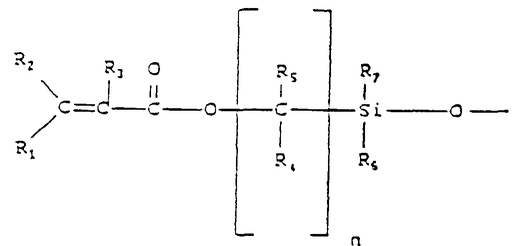 wherein R₁, R₂, R₃, R₄, R₅, R₆, R₇ and n are as defined above.

The term "organo radical" as used herein includes C₁-C₈ alkyl and phenyl.

In another aspect, the invention relates to a photocurable silicone composition comprising the above-described capped silicone and an effective amount of a photoinitiator for curing of the acryloxy-functional capped silicone under photoinitiating curing conditions.

The silicone functionality which is reactive with the silyl diacrylate compound may be located on any suitable portion of the silicone molecule. For example, the functionality of the silicone molecule may be bonded to a silicon atom of the silicone, or such reactive functionality may be bonded to another group in the silicone molecule, e.g., a hydrocarbon bridging group which in turn is joined to a silicon atom or other constituent atom or group in the molecule. Preferably, the reactive silicone functionality comprises a silicon-bonded functional group including a labile hydrogen constituent, with the proviso that such functional group is not hydrogen per se.

In another aspect, the present invention relates to a silicone composition, comprising:
(i) a first silane of the formula: 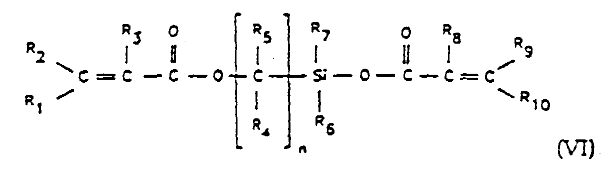 wherein:
   R₁, R₂, R₃, R₄, R₅, R₆, R₇, R₈, R₉, and R₁₀ are independently selected from hydrogen, halo, and C₁-C₈ alkyl or phenyl radicals; and n is an integer having a value of from 1 to 4;
(ii) a second silane of the formula: 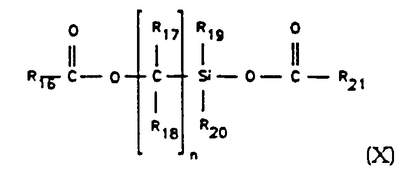 wherein:
   R₁₆ and R₂₁ are non-polymerizable groups and are independently selected from halo and organo radicals:
   R₁₇, R₁₈, R₁₉ and R₂₀ are independently selected from hydrogen. halo and organo radicals; and
(iii) a polysiloxane having at least two functional groups per molecule with which said first and second silanes are cappingly reactive;
   wherein:
   (a) the first and second silanes together are provided in sufficient quantity relative to the polysiloxane to react with substantially all (i.e.. 90%+) of the cappingly reactive functional groups of the polysiloxane, and (b) the first silane constitutes from 50% to 98% by of the total weight of the first and second silanes.

Preferably, the first and second silanes together are provided in sufficient quantity relative to the polysiloxane to react essentially completely therewith, i.e., with at least 98% of the cappingly reactive functional groups of the polysiloxane, and the first silane constitutes from about 70% to about 90% by weight of the total weight of the first and second silanes.

In a third aspect the present invention relates to the preparation of a silicone
(i) capped with acryloxy functional moieties derived from a silyl diacrylate capper of the formula: 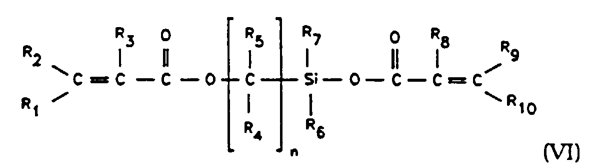 wherein:
   R₁, R₂, R₃, R₄, R₅, R₆, R₇, R₈, R₉, and R₁₀ are independently selected from hydrogen, halo, and organo radicals; and n is an integer having a value of from 1 to 4:
   whereby said resin is partially curable under radiation exposure conditions curingly effective therefor and optionally including the presence therewith of a photoinitiator, and
(ii) having additional functionality imparting to the silicone at least one. e.g.. a second, partial curing modality different from the partially curingly effective radiation exposure conditions constituting a first partial curing modality therefor.

The preferred silicones are those which are linear. and have terminal and/or pendant (1) acryloxy functionality and/or (2) additional functionality. They are generally represented by the following formula: 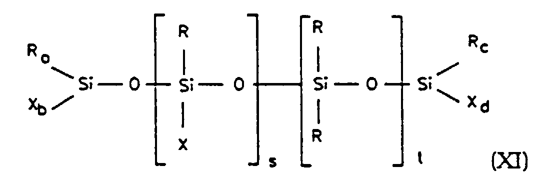 wherein:
each R is independently a radical or moiety which is non-reactive in the end-use composition in which the silicone is to be employed, i.e., not reactive with the cure mechanisms to be employed in the end use of the silicone, e.g., each R may be hydrogen, halo, or organo, and preferably is organo selected from C₁-C₈ alkyl and phenyl, most preferably methyl;
each X independently is (i) an acryloxy functionality derived from the silyl diacrylate capper, or (ii) an additional functionality which is dependent upon a desired further cure modality:
each of a, b, c and d is independently 0, 1, 2 or 3;
s is 0 or a positive integer, preferably less than 20, more preferably less than 8; and
t is a positive integer;
provided that:
   (a+b) = (c+d) = 3;
   (b+d+s) is greater, than or equal to 2; and
the equivalents ratio of acryloxysilyl functionality (i) to additional functionality (ii) is from 0.1:0.9 to 0.8:0.2, except where the silicone in its end use is employed in combination with a second constituent which cures by another curing modality, in which case the ratio may be up to 1.0:0.0.

It is understood that in any given silicone polymer chain in the above general formula, all X's may be (i) acryloxy functionality, (ii) additional functionality, or a mixture of (i) acryloxy functionality and (ii) additional functionality.

In another aspect, the present invention relates to a silicone composition, formed as a reaction product of:
(i) a first silane of the formula: 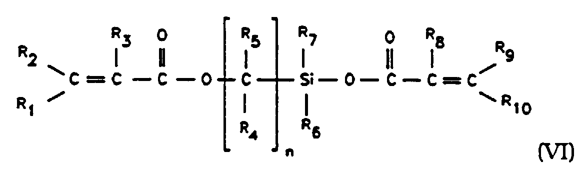 wherein:
   R₁, R₂, R₃, R₄, R₅, R₆, R₇, R₈, R₉, and R₁₀ are independently selected from hydrogen, halo, and organo radicals; and n is an integer having a value of from 1 to 4; and
(ii) a silicone having
   (A) functionality which is reactive with an acryloxy-functionality of said silyl diacrylate compound to yield an acryloxy-functional capped silicone which is partially curable under first curing conditions comprising curingly effective radiation exposure conditions optionally including the presence of a photoinitiator, and
   (B) additional functionality which renders the acryloxy-functional capped silicone partially curable by further curing conditions different from the curingly effective radiation exposure conditions constituting the first curing conditions.

By way of illustration, the silicone functionality which is reactive with the acryloxy functionality of the silyl diacrylate compound(s), may comprise a functionality, e.g., a silicon-bonded functionality, selected from the group consisting of:
-OH;
-N(R')₂, wherein each of the R' substituents is independently selected from hydrogen and organo groups, with the proviso that at least one R' substituent is hydrogen;
-SH;
SO₃H; and
where residual acrylic acid groups are present, 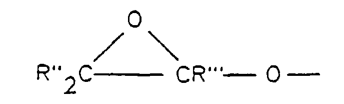 wherein each of the R" and R"' substituents is independently selected from hydrogen and organo groups.

In a particularly preferred aspect, the aforementioned silyl diacrylate has the formula: 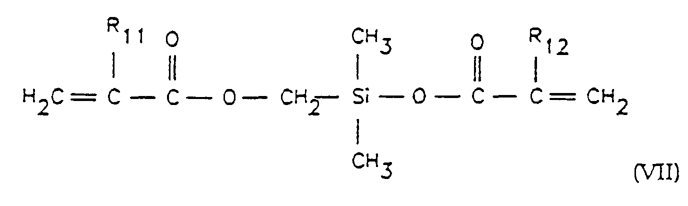 wherein R₁₁ and R₁₂ are independently selected from H and methyl; and
the silicone comprises a linear polydimethlysiloxane with terminal -OH groups.

Another aspect of the present invention relates to a photocured silicone material produced by photocuring a silicone composition comprising the above-described acryloxy-functional capped silicone, under conditions photocuringly effective therefor.

Still another aspect of the invention relates to a method of non-hydrolyzingly capping (i) a silicone having an active hydrogen-containing functionality, with (ii) acrylic functionality, to render the silicone photocurable under curing conditions optionally including the presence of a suitable photoinitiator therefor, comprising reacting such silicone with a silyl diacrylate compound of the formula: 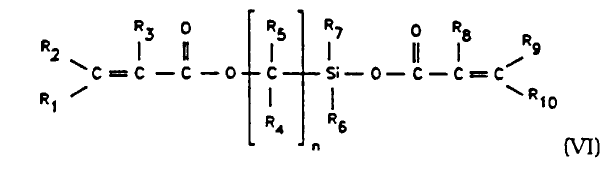 wherein:
R₁, R₂, R₃, R₄, R₅, R₆, R₇, R₈, R₉, and R₁₀ are independently selected from hydrogen, halo, and organo radicals; and n is an integer having a value of from 1 to 4.

A still further aspect of the invention relates to a method of making a silicone composition which is photocurable under photocuring conditions optionally including the presence of a suitable photoinitiator therefor, comprising:
(a) reacting
   (i) an acrylic acid compound of the formula: 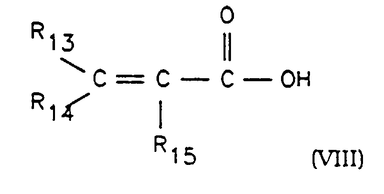 wherein:
      R₁₃, R₁₄, R₁₅ are independently selected from hydrogen, halo, and organo radicals, and
   (ii) a chlorosilane compound of the formula: 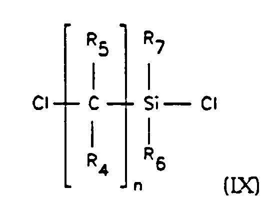 wherein:
      R₄, R₅, R₆, R₇ are independently selected from hydrogen, halo, and organo radicals; and
      n is an Integer of from 1 to 4:
      in the presence of
   (iii) a basic hydrogen chloride acceptor, to yield a silyl diacrylate compound of the formula: 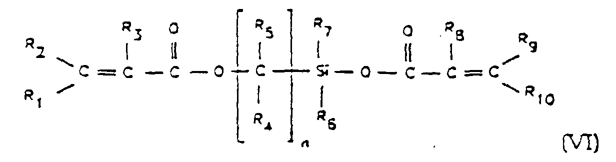 wherein:
      R₁, R₂, R₃, R₄, R₅, R₆, R₇, R₈, R₉, and R₁₀ are independently selected from hydrogen, halo and C₁-C₈ alkyl or phenyl radicals; and n is an integer having a value of from 1 to 4; and
(b) non-hydrolysingly reacting the silyl diacrylate compound with a silicone having at least one functionality which is reactive with an acryloxy functionality of the silyl diacrylate compound, to yield an acryloxy-functional capped silicone as the silicone composition, wherein the acryloxy-functional capped silicone is capped with capping moieties of the formula: 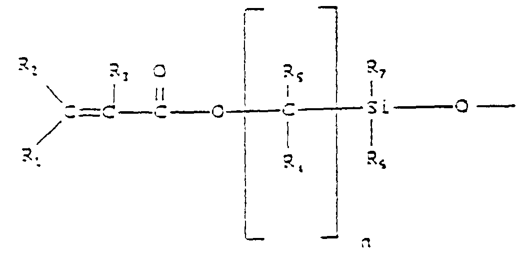 wherein
   R₁, R₂, R₃, R₄, R₅, R₆ and R₇ are is defined above.

In another aspect, the present invention relates to a method of capping a silicone having a cappable moiety in its structure, comprising:
(a) reacting a carboxyl functional capper precursor with a chlorosilane compound to yield as a reaction product a silyl capper compound which is cappingly reactive with the cappable moiety of the silicone; and
(b) reacting the silyl capper compound with the cappable moiety of the silicone to yield a capped silicone product.

A further aspect of the present invention relates to a photocurable silicone gel composition formed by reacting the silicone composition broadly described above, viz., the first and second silanes (a) and (b), respectively, with the polysiloxane (c). Such reaction may for example be carried out at a reaction temperature of from about 0° C to about 100° C, and preferably the reaction is conducted at ambient temperature, e.g., room temperature.

The reaction may be carried out for a selected time period to suitably cap the silanes. This time period will depend on the temperature of the reaction mixture, but generally it is in the range of 0.3 to 4 hours. The reaction may be carried out in any suitable diluent or reaction medium such as a hydrocarbon or halohydrocarbon, e.g., heptane. The resulting photocurable silicone gel composition by exposure to curingly effective radiation is cured to produce a soft silicone gel. For the purpose of effecting such cure, the photocurable silicone gel composition may be formulated with a suitable photoinitiator as appropriate to the specific curingly effective radiation (e.g., ultraviolet (UV) radiation) which is employed.

Yet another aspect of the present invention relates to a cured silicone gel material produced by photocuring the above-described photocurable silicoile gel composition, under conditions photocuringly effective therefor.

In another, more general aspect, the present invention relates to the preparation of a silicone composition, comprising:
(a) a silane of the formula: 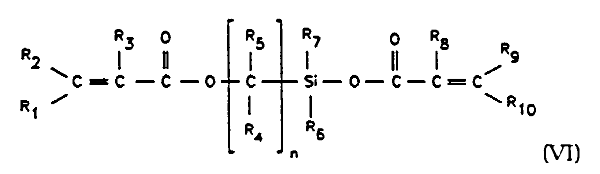 wherein:
   R₁, R₂, R₃, R₄, R₅, R₆, R₇, R₈, R₉, and R₁₀ are independently selected from hydrogen, halo, and organo radicals; and n is an integer having a value of from 1 to 4;
(b) a non-acrylic capper, and
(c) a polysiloxane having functionality which is reactive with the silane (a) and the non-acrylic second capper (b);
whereby the reactive functionality of the polysiloxane is partially cappable by said silane, and partially cappable by said second capper.

These components (a), (b) and (c) may be reacted to yield a photocurable silicone gel composition, which is curable by curingly effective radiation, optionally in the presence of a suitable photoinitiator, to form a product silicone gel.

Still another aspect of the invention related to a method of making a photocurable silicone gel composition, composing reacting:
(a) a first silane of the formula: 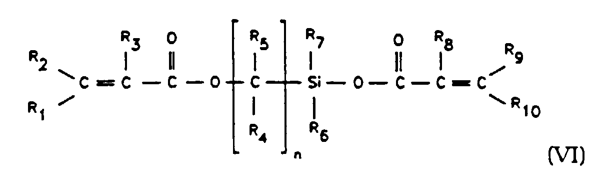 wherein:
   R₁, R₂, R₃, R₄, R₅, R₆, R₇, R₈, R₉, and R₁₀ are independently selected from hydrogen, halo, and organo radicals; and n is an integer having a value of from 1 to 4;
(b) a second silane of the formula: 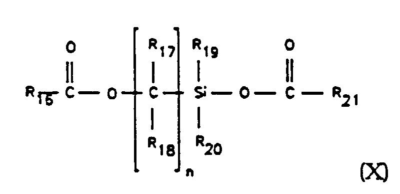 wherein:
   R₁₆ and R₂₁ are non-polymerizable groups and are independently selected from halo and organo radicals;
   R₁₇, R₁₈, R₁₉ and R₂₀ are independently selected from hydrogen, halo and organo radicals; and n is an integer of from 1 to 4; and
(c) a polysiloxane having at least two functional groups per molecule with which said first and second silanes are cappingly reactive;
   wherein:
   (i) the first and second silanes together are present in sufficient quantity relative to the polysiloxane, to react with substantially all of the cappingly reactive functional groups of the polysiloxane, and with the first silane constituting from about 50% to about 98% by weight of the total weight of the first and second silanes.

A further aspect of the invention relates to a method of forming a cured silicone gel, comprising subjecting the above-described silicone gel composition to curingly effective radiation for sufficient time to form a cured silicone material.

Another aspect of the present invention relates to a cured silicone material produced by partially photocuring a silicone composition comprising the above-described acryloxy-functional capped silicone, under conditions photocuringly effective therefor, and then further curing the silicone composition under conditions which are curingly effective for the additional functionality of the silicone. For example, the further curing may involve moisture cure when the additional silicone functionality comprises hydrolyzable functionality, such as alkoxy, oxime, or acetoxy groups. Alternatively, such additional functionality may impart further curability to the silicone by any suitable curing modalities, such as (a) ambient temperature curing, (b) elevated temperature curing, (c) reaction with curative species, (d) radiation exposure dithering from the radiation exposure which is curingly effective for the acryloxy functionality of the capped silicone.

Still another aspect of the invention relates to a method of capping:
(i) a silicone having (A) an active hydrogen-containing functionality and (B) additional functionality which renders the capped silicone partially curable by curing conditions other than radiation exposure, with
(ii) acrylic functionality, to render the silicone photocurable under radiation exposure optionally including the presence of a suitable photoinitiator therefor,
comprising reacting the active hydrogen-containing functionality (A) of such silicone with a silyl diacrylate compound of the formula: 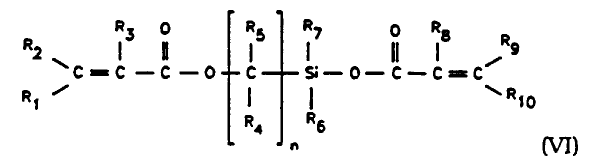 wherein:
R₁, R₂, R₃, R₄, R₅, R₆, R₇, R₈, R₉, and R₁₀ are independently selected from hydrogen, halo, and organo radicals; and n is an integer having a value of from 1 to 4.

In general, the above-described additional functionality of the silicone (sometimes hereinafter referred to as the "additional functionality"), i.e., functionality other than the acryloxy functionality of the silicone, may be any suitable functionality imparting the requisite further curing capability to the acrylic-capped silicone. A preferred further curing modality comprises moisture curing, and in such instance, the additional functionalily imparting such moisture cure characteristics to the silicone may, by way of example, be selected from the group consisting of:
amino;
vinyl;
hydrogen;
enoloxy;
hydroxy;
alkoxy;
aryloxy;
oxime;
-OOCR₃₃;
N,N-dialkylamino;
N,N-dialkylaminoxy;
N-alkylamido;
-O-NH-C(O)-R₃₃; 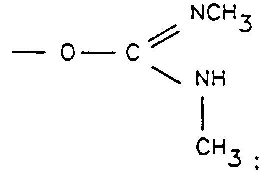 -O-C(CH₃)=CH₂; and
-S-C₃H₆Si (OCH₃)₃;
wherein R₃₃ is H or hydrocarbyl.

It is within the broad purview of the present invention:
(1) to utilize an acrylic capping compound (i.e., the silyl diacrylate compound) to functionalize and render partially photocurable a silicone which also contains additional functionality imparting a second curing modality to the acrylic capped silicone, as well as ,
(2) to utilize additional reactant(s), e.g., additional cappers, with the acrylic capping compound reacted with the silicone, in order to impart functionality to the silicone by which the further curing thereof may be effected.

In other words, (i) the silicone prior to capping thereof with the acrylic capping compound may already have additional functionality permitting the subsequently capped reaction product (silicone) to be further cured by a particular additional curing modality, and/or (ii) the reaction of the acrylic capper and the silicone may be conducted with an additional co-reactant species which reacts with the silicone to yield additional functionality imparting a further cure modality to the silicone.

Other aspects and features of the present invention will be more fully apparent from the ensuing disclosure and appended claims.

### DETAILED DESCRIPTION OF THE INVENTION AND PREFERRED EMBODIMENTS THEREOF

The photocurable composition of the present invention is based on the surprising and unexpected discovery that acrylic-functional capper compounds of the formula: 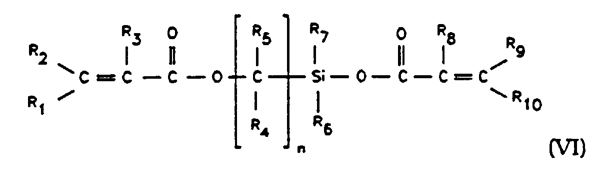 wherein:
R₁, R₂, R₃, R₄, R₅, R₆, R₇, R₈, R₉, and R₁₀ are independently selected from hydrogen, halo, and organo radicals; and n is an integer having a value of from 1 to 4,
may be used to cap silanol-terminated silicone polymers by simply mixing the capper with the silicone polymer for a short period of time at ambient or relatively low elevated temperature, e.g., 100° C, preferably at ambient or room temperature.

For ease of reference in the ensuing discussion, the acrylic functional capper of formula (VI) above will sometimes hereinafter be denoted as the "silyl diacrylate compound", the "silyl diacrylate capper", or more simply the "capper".

The highly efficient reaction of the silyl diacrylate capper with a silanol-ended silicone polymer was very surprising. It is generally perceived that monoacetoxysilanes at best will react with silanols only very sluggishly. It therefore is particularly unexpected that endcapping with the silyl diacrylate capper can take place at room temperature. Indeed, in the patent references hereinabove in the "Background of the Invention" section hereof, it is not even contemplated that such a facile reaction could take place. Instead, these references teach to hydrolyze the capper to prepare a silanol compound, contemporaneously with hydrosilylating a vinyl silicone polymer with a chloromethylsilane compound to yield a chloro-terminated silicone polymer. This extensive and circuitous synthetic route to achievement of an acrylic-functional terminated silicone polymer is based on the aforementioned general perception that monoacetoxysilanes will at best react with silanols only very sluggishly, and points up the substantial and unobvious character of the simple, economic methodology used for making the photocurable silicone product in the broad practice of the present invention.

The capper after it is formed by the reaction of a chlorosilane compound and acrylic acid, may subsequently be employed to form a photocurable silicone composition by reacting the capper with a silicone having at least one functionality which is reactive with an acryloxy functionality of the capper, to yield an acryloxy-functional capped silicone.

This acryloxy-functional capped silicone then may be suitably combined with an effective amount of a photoinitiator for curing of the acryloxy-functional capped silicone under photoinitiating curing conditions, to yield a photocurable silicone composition.

In embodiments of the present invention where two different cappers are employed the silyl diacrylate capper may suitably be formed by the reaction of a chlorosilane compound and acrylic acid, and may subsequently be employed to form a photocurable silicone composition by reacting (1) the silyl diacrylate capper and (2) a second, non-acrylic capper, preferably another silane capper which is non-acrylic in character (sometimes hereinafter referred to as "the second silane"), with (3) a silicone having functionality which is reactive therewith, to yield an acryloxy-functional capped silicone, which then is curable by curing conditions comprising radiation exposure, in the presence of a photoinitiator if required.

Among capper compounds of the general formula (VI) set out broadly hereinabove, a particularly preferred class of such compounds includes those in which R₁, R₂, R₃, R₄, R₅, R₈, R₉, and R₁₀ are independently selected from hydrogen, halo, and C₁-C₈ alkyl radicals, and R₆ and R₇ are independently selected from hydrogen, halo, C₁-C₈ alkyl, and phenyl. In this preferred class of compounds, n may have a value of 1 to 2, and most preferably is 1. When n is 2, the silyl diacrylate capper is a β-ohygenated silicon compound. As mentioned hereinabove, β-oxygenated silicon compounds have a susceptibility to undergoing β-elimination reaction, but despite this potential occurrence, β-oxygenated silyl diacrylate cappers of the present invention nonetheless are markedly superior to prior art β-oxygenated silicon capper compounds (e.g., the prior art capper compound of formula (I) described in the "Background of the Invention" section hereof), with respect to their ease of synthesis, and the economic advantages and time savings associated therewith. In any event, to minimize stability problems. n in the silyl diacrylate compounds of the present invention may suitably have a value of 1, 3, or 4.

A more specific class of preferred compounds of formula (VI) above includes compounds in which R₁, R₂, R₉ and R₁₀ are hydrogen; R₃, R₄, R₄ and R₈ are independently selected from hydrogen and C₁-C₈ alkyl; R₆ and R₇ are independently selected from C₁-C₈ alkyl, and phenyl; and n is 1.

A highly preferred silyl diacrylate capper in the practice of the present invention is the silyl diacrylate compound of the formula: 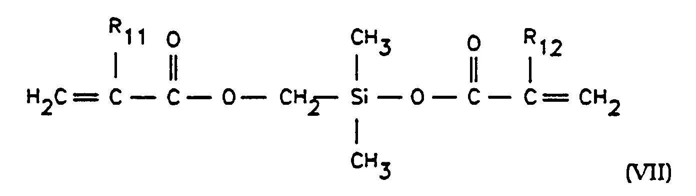 wherein R₁₁ and R₁₂ are independently selected from H and methyl.

The silicone which is reactive with the capper to form the acryloxy-functional capped silicone of the invention, may suitably have a silicone functionality reactive with the acryloxy functionality of the capper, which comprises a so-called "active hydrogen" constituent, e.g., a silicon-bonded functional group including a labile hydrogen constituent.

In general, the reactive functionality of the silicone which is reactive with the acryloxy functionality of the capper, may be located in any suitable part of the silicone molecule, as a terminal group of a silicone backbone, or as an end group of a side chain on the silicone, or otherwise as may be advantageous. Preferably, the silicone reactive functionality is bonded to a silicon atom in the silicon molecule, but such positioning is not required, and the silicone reactive functionality may be joined to any other atoms or groups in the silicone molecule, such as to a hydrocarbon bridging group, or other moiety of the silicone molecule.

The so-called second silane referred to above may have the formula: 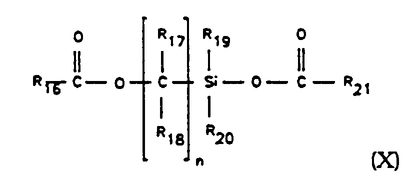 wherein:
R₁₆ and R₂₁ are non-polymerizable groups and are independently selected from halo and organo radicals;
R₁₇, R₁₈, R₁₉ and R₂₀ are independently selected from hydrogen, halo and organo radicals; and
n is an integer having a value of from 1 to 4.

In the second silane of the above general formula, R₁₆ and R₂₁ more preferably are independently selected from hydrocarbyl, fluorocarbyl and fluorohydrocarbyl. By way of example, R₁₆ and R₂₁ may suitably be organo radicals containing from 1 to 8 carbon atoms, and most preferably are independently selected from C₁-C₈ alkyl radicals. Preferably, R₁₇, R₁₈, R₁₉ and R₂₀ are independently selected from hydrogen, lower (C₁-C₈) alkyl, and phenyl, and most preferably R₁₇ and R₁₈ are hydrogen, and R₁₉ and R₂₀ are methyl.

A highly preferred second silane capper has the formula:

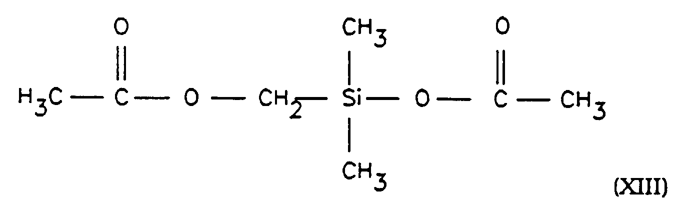

Although the second silane described above is a preferred additional capper employed in combination with the silyl diacrylate capper, to cap the functional sites on the silicone which are reactive therewith, it will be appreciated that the invention may broadly be practiced utilizing second capper species other than the second silane capper illustratively discussed hereinabove.

The purpose of the second capper is to cap a portion of the cappable reactive sites on the silicone, so that only part of the cappable sites are capped with the silyl diacrylate capper. In other words, a portion of the cappable sites on the silicone is capped with the silyl diacrylate capper, and a portion is capped with the second capper. By his less-than-complete capping with the silyl diacrylate capper, the resulting silicone when photocured will exhibit an increased softness and gelatinous character, relative to a corresponding silicone which is fully capped with the silyl diacrylate capper.

It may also be feasible in some instances to cap the silicone with only a silyl diacrylate capper of the type described above, but to carry out the capping with an equivalents ratio of the capping acryloxysilyl functionality (i.e., capping moieties derived from the silyl diacrylate capper) to the acryloxy-reactive functionality of the silicone, of less than 1.0, so that some of the acryloxy-reactive functionality on the silicone remains uncapped.

In general, however, when a softened photocured composition is desired, it is preferred to cap all of the acryloxy-reactive functionality of the silicone, in part with the silyl diacrylate capper, and in part with a second capper, rather than providing only the silyl diacrylate capper (acryloxysilyl functionality) in a less than 1.0 equivalents ratio relative to the reactive functionality of the silicone. The reason for this preference is that if reactive, uncapped functionality remains on the silicone, it may undesirably give rise to a second curing modality, e.g., moisture cure, which may yield physical properties approaching those of the corresponding fully acrylic-capped silicone, when a softer (lower durometer hardness) material is desired as the final cured product.

Thus, the second capper may comprise various organocarboxy capper species of formula (X) above, as well as any other suitable capper compounds which are reactive with the functionality of he polysiloxane which also is reactive with the silyl diacrylate capper.

In the broad practice of this embodiment of the present invention, the silyl diacrylate, or first silane capper, may suitably comprise a mixture of various compounds within the general formula of (VI) above, and the second capper may likewise comprise a mixture of silane compounds of the general formula (X) above.

Concerning the functional groups of the polysiloxane which are cappingly reactive with the first and second silane cappers, such functional groups may include any suitable functionality which is reactive with the first and second silanes to provide a resulting photocurable silicone gel composition. The silicone functionality which is reactive with the acryloxy functionality of the silyl diacrylate compound may be located in any appropriate part of the silicone molecule, e.g., as a terminal functionality on a linear silicone backbone, as an end group on a siloxy side-chain, or otherwise with the structure of the silicone. Correspondingly, the silicone functionality which is reactive with the acryloxy functionality of the silyl diacrylate compound, may be bonded to any suitable atom or moiety in the silicone molecule, e.g., to a silicon atom, or to another atom or group in the molecule. e.g., a hydrocarbon bridging group which in turn is joined to a silicon atom. In a preferred aspect, the silicone functionality which is reactive with the acryloxy functionality of the silyl diacrylate compound, comprises a silicon-bonded functional group including a labile hydrogen constituent, with the proviso that such functional group is not hydrogen per se.

By way of example, the silicone functionality which is reactive with the acryloxy functionality of the capper, may comprise an active hydrogen-containing functionality, such as a silicon-bonded functionality of such type, selected from the group consisting of:
-OH;
N(R')₂, wherein each of the R' substituents is independently selected from hydrogen and organo groups, with the proviso that at least one R' substituent is hydrogen;
-SH; and
-SO₃.

In instances where the capper component reacted with the cappable silicone contains residual acrylic acid groups deriving from the synthesis of the capper, the silicone functionality which is reactive with the capper may be constituted by a functionality, e.g., a silicone bonded functionality, of the form 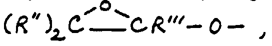 wherein each of the R" and R"' substituents is independently selected from hydrogen and organo groups.

Preferably the active hydrogen-containing functionality is hydroxyl, and such functionality is silicon-bonded.

It will be recognized that the foregoing species of functionality for the polysiloxane are illustrative only and that any other functional groups which are reactive with the capper species employed, which are compatible with the constituents of the formulation in which the capped polysiloxane ultimately is used, and which do not preclude the utility of the resulting photocurable silicone compositions for their intended purpose, may advantageously be employed.

The silicone which is co-reacted with the capper may suitably comprise a linear polydiorganosiloxane, or other linear silicone, having a weight average molecular weight which may for example range from about 700 to about 300,000, preferably from about 10,000 to about 80,000, and most preferably from about 10,000 to about 50,000.

Although he silicone reacted with the capper to form the acryloxy-functional capped silicone of the invention is preferably linear in conformation, other, non-linear silicones, e.g., branched, cyclic, or macromeric, may potentially usefully be employed in the broad practice of the present invention. Preferably, the silicone (polysiloxane) is predominantly linear in character. The acryloxy-reactive functionality may be located in any suitable portion of the polysiloxane molecule, for example as terminal and/or pendant functionality, but preferably is a terminal functional group, and most preferably, the polysiloxane is a linear molecule both of whose terminal functional groups comprise acryloxy-reactive functional groups, e.g., terminal hydroxy groups. Thus, for example, the polysiloxane material may comprise a hydroxy-terminated polydiorganosiloxane, e.g., a hydroxy-terminated polydimethyl-siloxane, or a hydroxy-terminated polydiphenylsiloxane. Preferably, the silicone is an organo polysiloxane whose organo substituents are predominantly methyl. A particularly preferred polysiloxane material which has been usefully employed in the practice of the present invention is a hydroxy-terminated polydimethylsiloxane of linear configuration, having a weight average molecular weight on the order of 28,000.

Although the polysiloxane which is reacted with the first and second cappers to form the capped photocurable silicone gel composition of the invention is preferably linear in conformation, other non-linear silicones, e.g., branched, cyclic, or macromeric, may potentially usefully be employed in the broad practice of the present invention. Preferably, the polysiloxane is predominantly linear in character.

The cappable functionality which is reactive with the first and second silane cappers may be located in any suitable position on the polysiloxane molecule, including terminal positions in linear polysiloxane molecules, or terminal positions of chains of siloxy units in the polysiloxane molecule, as well as pendant functionality positions and positions in intermediate or interior moieties of the molecule, but preferably the polysiloxane comprises terminal reactive functional groups, and most preferably, the polysiloxane is a linear molecule both of whose terminal functional groups are cappingly reactive with the first and second cappers, e.g., terminal hydroxy groups. Thus, for example, the polysiloxane material may comprise a hydroxy-terminated polydiorganosiloxane, e.g., a hydroxy-terminated polydimethylsiloxane. Preferably, the starting polysiloxane material is a polydiorganosiloxane whose organo substituents are predominantly methyl. A particularly preferred polysiloxane material which has been usefully employed in the practice of the present invention is a hydroxy-terminated polydimethylsiloxane of linear configuration, having a weight average molecular weight on the order of about 28,000.

As mentioned, the silicone comprising the acryloxy-reactive functionality may be macromeric in character, including polysiloxane resins comprising M, D, T, and Q siloxy units, with at least one acryloxy-reactive functionality, and preferably more than one acryloxy-reactive functionality, per molecule.

As used in he preceding paragraph, the terms M, D, T, and Q units refer to monofunctional, difunctional, trifunctional and tetrafunctional siloxy units, respectively, as defined in U.S. Patent 4,568,566, to L. A. Tolentino, at column 5. lines 51-55 thereof.

Although the capper and the silicone comprising acryloxy-reactive functionality may be utilized in any suitable proportions relative to one another, consistent with the number of acryloxy-reactive functional groups on the silicone molecule, it generally is preferred to utilize relative amounts of the capper and the acryloxy-reactive silicone providing up to about 1.5 or more equivalents of acryloxysilyl functionality for reaction with the acryloxy-reactive functionality of the silicone, and preferably the equivalents ratio of acryloxysilyl functionality to acryloxy-reactive functionality is from about 1.0 to about 1.2.

If the equivalents ratio of the acryloxysilyl functionality of the capper to the acryloxy-reactive functionality of the silicone is less than 1.0, so that the acryloxy-reactive functionality of the silicone is not fully capped with acryloxysilyl functionality, then photocuring of the resultant partially capped silicone will produce a photocured silicone of a softer (lower durometer) character than the corresponding photocured silicone which is fully capped with acryloxysilyl functionality. Thus, the softness of the photocured product increases with decreasing extent of acryloxysilyl capping. In this manner, it is possible to formulate partially-capped silicones having a soft, gelatinous consistency which may be usefully employed in applications such as sealants, conformal coatings, and potting materials, as more fully described hereinbelow.

It may also be desirable in some applications to utilize a less than stoichiometric amount of the acrylic capper, relative to the acryloxy-reactive functionality present on the silicone, to produce a polymodal-curing silicone, by employing the remaining uncapped functionality to provide another cure modality, either by itself, or as further functionalized by reaction with another capper or other co-reactant. Silicone compositions of such type are more fully described hereinbelow.

In the reaction of the polysiloxane with the first and second silanes, the poly-siloxane is capped with acryloxy functionality deriving from the first silane, while concurrently the polysiloxane is capped by functionality, e.g., acetoxy functionality, deriving from the second silane.

For example, when acryloxymethyldimethylacryloxysilane is employed as the first silane, the capping moiety resulting therefrom is an acryloxymetyldimethylsiloxy functional group, and when acetoxymethyldimethylacetoxysilane is employed as the second silane, the capping moiety resulting therefrom is an acetoxymethyldimethylsiloxy group.

In general, any suitable ratio of the first and second silanes relative to one another may be employed, depending on the ultimate physical properties and end use application desired for the silicone gel produced by photocuring the photocurable composition. The second silane provides a capping moiety on the polysiloxane which does not contribute to the polymerizability of the polysiloxane, in contrast to the first silane, which caps the polysiloxane to provide an acryloxy functionality by means of which the polysiloxane is rendered polymerizable under photocuring conditions. Thus, with respect to the available "cappable" sites on the polysiloxane molecule, an increasing concentration of the second silane relative to the first silane will produce a progressively softer silicone gel when the capped composition is polymerized. In this manner, the second silane serves to functionalize the polysiloxane with "inert" or non-polymerizable capping moieties.

If all of the available capping sites on the polysiloxane are capped with acryloxy functionality deriving from the first silane, the resulting silicone composition when cured produces a very hard, physically tough, polymerized silicone product. Conversely, if all of the capping sites on the polysiloxane are capped by the second silane, then no polymerization of the polysiloxane will be effected under photocuring conditions, and the material will be and remain fluid in character. Intermediate to these two extremes, the polysiloxane will be increasingly softened with respect to its final cured product as the proportion of its capping sites occupied by capping moieties derived from the second silane increases, relative to the number of capping sites on the polysiloxane which are occupied by acryloxy capping functionality deriving from the first silane.

As a further specific illustration of the variation in physical properties of he cured silicone associated with changes in the relative proportions of the first and second silanes, using a 28,000 weight average molecular weight silanol-terminated linear polydimethylsiloxane as the resin to be capped, a polysiloxane of such type when fully endcapped with acryloxy functionality has a durometer (00) hardness value after the material is photocured which is on the order of 75. By contrast, a polysiloxane starting material of the same type, when approximately half of the cappable sites on the polysiloxane molecule are capped with acryloxymethyldimethylsiloxy functionality, deriving from acryloxymethyldimethylacryloxysilane as the first silane capper, and half with acetoxymethyldimethylsiloxy functionality, deriving from acetoxymethyldimethylsiloxy as the second silane ("inert") capper, yields a capped silicone which is a very soft gel and which probably has a durometer (00) hardness value of 5 or less when photocured. Intermediate these relative capping concentrations, with acryloxy functionality capping levels on the order of 75% of the available capping sites on the polysiloxane molecule, and the remaining 25% of such sites being occupied by capping moieties deriving from the inert capper (second silane), the durometer (00) hardness may be on the order of 15-25.

It will be apparent from the foregoing that the physical properties of the capped silicone when photocured may be varied widely by changing the relative amounts of the first and second silanes which are employed to cap the silicone. Thus, the amount of each capper which is employed in a given application will depend on the specific end use of the photocured material, and the specific chemical compositions of the cappers and the polysiloxane which are employed. The relative amounts of the cappers which are required for any specific application may readily be determined by the skilled artisan without undue experimentation, by simple tests involving variation of the relative amounts of the two cappers and subsequent measurement of the cured properties of the appertaining composition.

In general, the requisite softening of the cured polysiloxane material, in applications such as conformal coatings, sealantsn potting applications, and the like, may be achieved with relative amounts of the first silane (acrylic capper) to the second silane (inert capper) of from about 50% to about 90% by weight of the first silane, based on the total weight of the first and second silanes, and with the total amount of first and second silanes being stoichiometrically adequate to effect substantially full capping of the available capping sites on the polysiloxane molecule.

Preferably the (first silane)/(first silane + second silane) weight ratio is from about 0.5 to about 0.98, and preferably from about 0.7 to about 0.9. Correspondingly, in the capped polysiloxane, it is preferred that the equivalents ratio of the capping functionality derived from the first silane to the total capping functionality devived from the first and second silanes with which the polysiloxane is capped is from about 0.50 to about 0.98, and most preferably from about 0.70 to about 0.90.

Preferably, at least a stoichiometric (total) amount of the two cappers (first silane and second silane) is employed with the polysiloxane, and most preferably. a slight stoichiometric excess of the two cappers is employed to ensure full capping of the available sites on the polysiloxane.

In such manner, the first and second silanes together are provided in sufficient quantity relative to the polysiloxane to react with substantially all (i.e., at least 90%) of the cappable reactive functional groups (reactive sites) of the polysiloxane, and most preferably the capping of such functional groups of the polysiloxane is essentially complete, i.e., at least 98% of such sites are capped.

The capping reaction takes place relatively rapidly (e.g., from about 0.1 to about 4 hours) at ambient (room temperature) conditions, and such ambient conditions are preferred to avoid the requirement of heating the reaction mixture (comprising the first and second silanes and the polysiloxane) to yield the photopolymerizable silicone gel composition. Generally, however, the reaction may be usefully conducted at temperatures in the range of from about 0° C to about 100° C, with higher temperatures within such range being usefully employed to effect removal of any acrylic acid produced in the synthesis.

Although this embodiment of the invention has been described hereinabove with particular reference to capping of a cappable polysiloxane (silicone) with (1) a silyl diacrylate capper (first capper) and (2) a second capper, which may for example comprise acetoxymethyldimethylacetoxysilane, or other silyl diester compound, it will be appreciated that such description is illustrative only, and that other capping moieties may be used in the broad practice of the present invention. For example, the capper may comprise a single silane compound having both acryloxy and acetoxy functionality, whereby the silicone is difunctionally capped with acryloxy and acetoxy moieties using a single capper compound.

Further, a silicone gel composition may be advantageously synthesized in some applications by fully capping the silicone with a silyl diacrylate capper, followed by reaction of a portion of the resulting acryloxy capping moieties with a less than stoichiometric amount of a co-reactant, yielding a reaction product capping moiety which is non-polymerizable in character.

As a further alternative, it may be advantageous in some applications to cap a portion of the reactive sites on the silicone with a silyl diacrylate compound, and to cap the remaining reactive sites with more than one "inert", or non-polymerizable, capper species. What is required in each instance, regardless of the synthesis methodology, is the provision of a photocurable silicone having only a portion of its cappable sites capped with polymerizable acrylic functionality.

After being polyfunctionalized by capping with the first and second silanes, the acryloxy-functional capped silicone may be suitably combined with an effective amount of a photoinitiator for curing of the acryloxy-functional capped silicone under photoinitiating curing conditions. The polyfunctionalized silicone and the photoinitiator may also be formulated with any compatible and efficacious curatives, other initiators, accelerators, etc., as appropriate to the character of the desired silicone gel produced by photocuring of the composition.

The photocurable silicone composition of the present invention may suitably comprise a photoinitiator which may include any photoinitiator known in the art which is effective to cause curing of acrylic functionalities. Potentially useful photoinitiators may include, by way of example, benzion, substituted benzions such as benzion ethyl ether, benzophenone, benzophenone derivatives. Michler's ketone, dialkoxyacetophenones such as diethoxyacetophenone, acetophenone, benzil, and other derivatives (substituted forms) and mixtures thereof. A particularly preferred photoinitiator material is diethoxyacetophenone. Although any suitable effective amount of photoinitiator may be employed in the photocurable silicone compositions of the invention, generally the photoinitiator concentration will usefully be in the range of about 0.1% to about 10% by weight, and more specifically and preferably from about 0.2% to about 5% by weight, based on the weight of the capped silicone.

The photoinitiator employed in the photocurable silicone compositions of the present invention may also be polymer bound. Such photoinitiators are described in U.S. Patent Nos. 4,477,326 and 4,587,276. Other free radical initiators, such as peroxy thermal initiators may be used in some of the lower molecular weight silicone formulations of the invention.

The additional functionality referred to above as imparting additional curing modality or modalities to the silicone molecule may be already present in the molecule at the time that the silicone is reacted with the capper. Alternatively, the silicone may be provided with such additional functionality at the same time as the silicone is reacted with the acrylic capper to form the acryloxy-functional capped silicone, or subsequently thereto. The additional functionality can either directly impart additional curing capability to the silicone, so that such functionality alone permits the silicone to cure by other cure mode(s), or else the additional functionality can indirectly impart additional curing capability to the silicone, as a precursor, intermediate, or co-reactant with another species, resulting in curing or curability of the silicone by-other cure mode(s).

In a usefully employed synthesis method, the silicone is suitably polyfunctionalized, by reacting the silicone with the capper at the same time as the silicone is reacted with a co-reactant to provide the additional functionality on the silicone molecule. The additional functionality imparts to the capped silicone the capability of curing under conditions other than he radiation exposure conditions which are curingly effective for the silicone as a result of its capping by the silyl diacrylate compound.

Regardless of the specific synthesis methodology and reaction steps employed to functionalize the silicone for polymodal curing, there is provided a silicone which:
(i) is capped with acryloxy functional moieties derived from a silyl diacrylate capper of the formula: 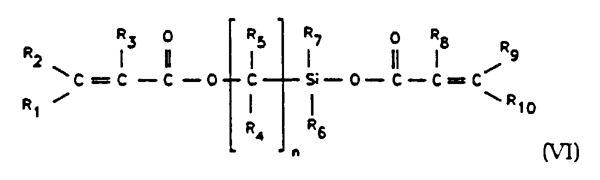 wherein:
   R₁, R₂, R₃, R₄, R₅, R₆, R₇, R₈, R₉, and R₁₀ are independently selected from hydrogen, halo, and organo radicals: and n is an integer having a value of from 1 to 4;
   whereby the silicone is partially curable under radiation exposure conditions curingly effective therefor, and
(ii) has additional functionality impaiting to the silicone at least one, e.g., a second, partial curing modality different from the partially curingly effective radiation exposure conditions constituting a first partial curing modality therefor.

In such manner, the resulting capped and polyfunctionalized silicone is able to be partially cored by radiation exposure, which is partially curingly effective for the silicone by virtue of its acryloxy functional moieties (and optionally, and preferably, with a suitable photoinitiator being present), with the silicone also being partially curable by another (or other) curing mode(s), e.g., under curing conditions such as:
(a) ambient temperature exposure;
(b) moisture exposure;
(c) elevated temperature exposure;
(d) reaction with curative species; and
(e) radiation exposure differing from the radiation exposure which is curingly effective for the silicone by virtue of its acryloxy functionalization.

By way of example, the silicone may be additionally functionalized with oxirane functionality, such as cycloaliphatic epoxy groups, epoxidized novolak functionality, or glycidoxy groups. As is well known, a wide variety of curing conditions and curatives may be employed to cure various epoxy materials, as described in "Epoxy Resins, Chemistry and Technology," May and Tanaka. Marcel Dekker, Inc., New York ( 1973), hereby incorporated by reference. Heat-curing epoxy functionality may be employed with conventional heat-activated epoxy curatives, as for example:
(i) Lewis acid (cationic) catalysts, such as boron trifluoride amine complexes, e.g., boron trifluoride monoethyl amine, as well as the metal halides of tin, aluminum, zinc, boron, silicon, iron, titanium, magnesium, and antimony, and the like;
(ii) acid anhydrides, such as hexahydrophthalic anhydride, tetrahydrophthalic anhydride, nadic methyl anhydride, dodecenyl succinic anhydride, and the like;
(iii) imidazoles, such as derivatives of 2-phenyl imidazole, and derivatives of 1-cyanoethyl-2-phenylimidazole, and the like;
(iv) dicyanodiamide, optionally in combination with accelerators such as phenyl methyl urea or piperidine;
(v) latent amine curatives, such as the modified polyamide disclosed in U.S. Pat. No. 4,459,398, and available from Ciba Geigy as Hardner HT939;
(vi) amines per se, e.g., tertiary amines such as pyridine, 2,4,5-tris(dimethylaminoethyl)phenol, benzyldimethylamine, and triethylamine, and secondary amines such as piperidine, diethanolamine, and the like; and
(vii) dissociable amine salts, such as the tri(2-ethyl-hexanoate) salt of tris(dimethylaminomethyl)phenol, and the like.

Silicones with oxirane functionality may also be cured at ambient temperature conditions using a variety of known and commercially available curatives.

Another class of additional functional groups which may be provided on the capped silicone molecule comprises moisture-curing functionality, e.g., alkoxy, enoloxy, amine, acetoxy, oxime, etc., cured by exposure at ambient conditions, e.g., in the presence of atmospheric moisture.

Another class of functional groups imparting additional partial curability to the capped silicone molecule comprises isocyanate functionality, by which the capped silicone may be cured in the presence of active hydrogen-containing compounds. The active hydrogen compounds may for example be silanols, polyesters prepared from polycarboxylic acids and polyhydric alcohols, polyhydric polyalkylene ethers having at least two hydroxy groups, polythioether glycols, polyester amides, etc.

A further class of additional functionality which may be potentially suitable for imparting partial cure characteristics to the capped silicone molecule comprises vinyl functionality. The vinyl-containing capped silicone resin may be usefully employed with a cross-linking agent such as a hydride-containing resin or a hydrogen-containing polysiloxane, and may be cured at room temperature in the presence of a platinum catalyst.

Still other functional groups which may be usefully employed as the additional functionality of the capped silicone molecule include alkyd and aminoplast moieties.

It will be recognized that the foregoing classes of additional functionality for the capped silicone in the broad practice of the present invention, are illustrative only and that any other effective functionality or functional groups, which are compatible with the capped silicone and other constituents of the formulation in which the capped silicone ultimately is used, and which do not preclude the utility of the silicone, may advantageously be employed.

Moisture-curing, acryloxy-capped silicones are a preferred multifunctionalized silicone species within the broad scope of the present invention. It may be advantageous, depending on the specific identity of the functonality imparting moisture curability to the silicone, to include a moisture curing catalyst, such as an orthotitanate catalyst, in compositions containing the radiation-curable/moisture-curable silicone. Where the moisture cure (hydrolyzable) groups are methoxy or other hydrocarbyloxy groups, such catalysts are generally necessary to achieve cure. On the other hand, where the hydrolyzable groups are amino, such catalysts may not be necessary.

Radiation-curable/moisture-curable capped silicones in the practice of the present invention may for example comprise as the moisture cure-imparting functionality the following functional groups, which preferably are bound to silicon atoms in the silicone:
amino;
vinyl;
hydrogen;
enoloxy;
hydroxy
alkoxy;
aryloxy;
oxime;
-OOCR₃₃;
N,N-dialkylamino;
N,N-dialkylamionoxy;
N-alkylamido;
-O-NH-C(O)-R₃₃; 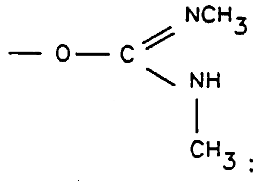 -O-C(CH₃)=CH₂; and
-S-C₃H₆Si(OCH₃)₃;
wherein R₃₃ is H or hydrocarbyl.

For example, the silicone being functionalized with a moisture-curing functionality may suitably comprise a silanol-functionalized polydiorganosiloxane, and the co-reactant therewith may be a silane cross-linker of the formula: 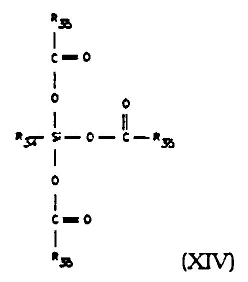 wherein: R₃₄ is C₁-C₈ alkyl, or 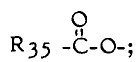 and each R₃₅ is independently selected from hydrogen and C₁-C₈alkyl.

Another illustrative co-reactant cross-linker which may be usefully employed to impart moisture curability to a silicone containing silanol groups, or other functionality reactive with the cross-linker, comprises vinyltrimethylethylketoximosilane.

As a further, more specific example, the starting silicone material may comprise a silanol-functionalized polydimehylsiloxane, and the moisture cure-functionalizing co-reactant may comprise ethyltriacetoxysilane, as a result of which the silicone reaction product is functionalized with acetoxy functionality.

Other cross-linker co-reactant species potentially useful for moisture-curably functionalizing the silicone in the broad practice of the present invention are well-known in the moisture-curing silicones art and are readily commercially available.

Although the foregoing discussion of additional cure functionality has been directed to the preferred silicone having further moisture-curing capability in addition to radiation exposure curability, it will be recognized that the silicones of the invention may be otherwise functionalized for further curability, e.g., with members of the classes of functional groups hereinabove described, and that the silicones may be polyfunctionalized for more than two cure modalities. For example, silicones may be multifunctionalized for concurrent or sequential curing, such as by:
(i) radiation curing, (ii) moisture-curing, and (iii) heat curing:
(i) radiation curing, (ii) anaerobic curing, and (iii) moisture curing; etc.

Depending on the composition, processing, and end use of the composition containing the polymodal-curing silicone of the present invention, any suitable sequence of curing steps can be carried out to effect curing of the silicone composition. Thus, the photocuring effected by radiation exposure of the composition can be carried out initially, prior to other curing step(s), or such radiation curing may take place as the final curing step, or alternatively such radiation curing may be an intermediate step in a series of three or more curing steps which are carried out to fully cure the silicone composition.

In general, however, it is preferred, particularly when the silicone composition is employed in coating, bonding, and potting applications requiring handling, assembly, or packaging immediately after the composition is applied, to initially cure the silicone composition by exposure to radiation and to provide photocurable acrylic functionality in sufficient quantity to immobilize the composition and render it amenable to such further handling, assembly, packaging, or other processing steps, in instances in which the subsequent curing step(s) are desirably or necessarily delayed until the completion of such "downstream" activity.

The compositions of the invention may also include other ingredients to modify the cured or uncured properties of the compositions, as desired for specific end uses.

Fillers or reinforcing materials may usefully be employed in compositions of the present invention to provide enhanced mechanical properties, and in some instances enhanced UV radiation curability of the composition. Among preferred fillers are reinforcing silicas. The reinforcing silicas are fumed silicas which may be untreated (hydrophilic) or treated so as to render them hydrophobic in character.

In general, fillers may be employed at any suitable concentration in the curable silicone composition, but generally are present at concentrations of from about 5% to about 45% by weight, based on the weight of the acryloxy-functional capped silicone. Generally, any other suitable mineralic, carbonaceous, glass, or ceramic fillers may be potentially advantageously employed. Examples include ground quartz, tabular alumina, diatomaceous earth, silica balloons, calcium carbonate, carbon black, titanium oxide, aluminum oxide, aluminum hydroxyde, zinc oxide, glass fibers, etc.

In addition, the photocurable silicone composition may also optionally contain an adhesion promoter, to enhance the adhesive character of the composition for a specific substrate (e.g., metal, glass, ceramic, etc.), when the composition is employed for such purpose, depending on the specific substrate elements employed in a given application. For example, the adhesion promoter might be selected to enhance adhesion of the composition on substrates comprising materials such as metals, glasses, plastics, ceramics, and mixtures, blends, composites, and combinations thereof. Various organosilane compounds may be usefully employed for such purpose, and such compounds may also desirably feature oxirane functionality, as well as silicon-bonded alkoxy substituents, to provide broad adhesive bonding utility. In such organosilane compounds, the oxirane functionality may be provided by a gylcidoxyalkyl substituent on a silicon atom of the silane compound. A particularly preferred adhesion promoter of such type is glycidoxypropyltrimethoxysilane.

In addition, further additives, such as MQ or MDQ resins, can be incorporated, to vary the properties of the silicone composition as desired.

Besides he constituents identified above as being optionally includable in the silicone compositions of the resent invention, further optional constituents include anti-oxidants, flame retardants, and pigments, etc., as well as filler adjuvants, e.g., filler-treating agents such as hydroxy-terminated vinylmethoxysiloxane, for filler treatment of quartz or similar fillers when used in the composition.

The photocurable silicone compositions of the present invention may be photocured by exposure to any radiation conditions which are curingly effective for the composition. Suitable radiant energy types which may be usefully employed include electron beam radiation, ulkaviolet radiation, visible light radiation, gamma radiation, X-rays, β-rays, etc. Preferably, the photocuring radiation is actinic radiation, i.e., electromagnetic radiation having a wavelength of about 700nm or less which is capable of effecting cure of the silicone composition. Most preferably, the photocuring radiation comprises ultraviolet (UV) radiation.

Curing may suitably be carried out in an ambient atmosphere or in an inert atmosphere such as argon or nitrogen. Exposure time required to cure the applied composition varies with such factors as the particular formulation used, type and wavelengh of radiation, energy flux, concentration of photoinitiator, and thickness of the coating, but it is generally quite short, that is, less than about 3 minutes. Exposing the composition to excessive amounts of radiation may "overcure" the composition, resulting in poor physical and performance properties. The amount of radiation which is excessive varies with the given formulation, coating thickness, radiation source, etc., and may easily be determined by the skilled artisan without undue experimentation.

The depth of radiation penetration in the silicone composition will depend on the constituents, fillers, and other compositional factors. Generally in filled silicone compositions, the depth of radiation penetration is on the order of about 120 mils when ultraviolet light is used as the radiant medium.

In some instances, it may be feasible to photocure the silicone composition without any constituent photoinitiator therein, however it is generally desirable to utilize a photoinitiator to initiate the curing of the acryloxy-functional capped silicone, by substantial polymerization thereof.

In the preferred synthesis of the acryloxy-functional silicone employed in the broad practice of the invention, the following sequence of reaction steps is carried out:
(a) reacting (i) an acrylic acid compound of the formula: 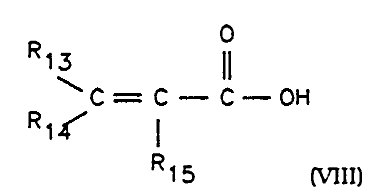 wherein:
   R₁₃, R₁₄, and R₁₅ are independently selected from hydrogen, halo, and organo radicals,
   with (ii) a chlorosilane compound of the formula: 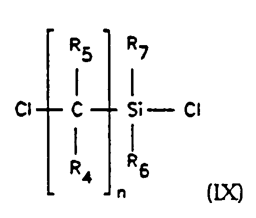 wherein:
   R₄, R₅, R₆ and R₇ are independently selected from hydrogen, halo, and organo radicals; and
   n is an integer of from 1 to 4;
   in the presence of (iii) a basic hydrogen chloride acceptor, to yield a silyl diacrylate compound of the formula: 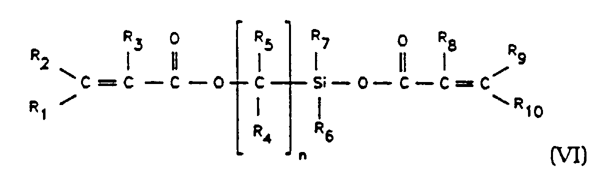 wherein:
   R₁, R₂, R₃, R₄, R₅, R₆, R₇, R₈, R₉, and R₁₀ are independently selected from hydrogen, halo, and organo radicals; and n is an integer having a value of from 1 to 4;and
(b) reacting the silyl diacrylate compound with a silicone having at least one functionality which is reactive with an acryloxy functionality of the silyl diacrylate compound, to yield an acryloxy-functional capped silicone as the silicone.

In the embodiment of the invention producing a gel system the silyl diacrylate compound is reacted with a silicone having functionality which is reactive with an acryloxy functionality of the silyl diacrylate compound, to thereby cap the silicone with acryloxy functionality. The silicone also is reacted with a second silane to functionalize the silicone with inert (non-polymerizable) functionality. These respective capping steps may be carried out concurrently or in any suitable sequence to yield the capped polyfunctional silicone as product.

It will be appreciated that the acrylic acid component employed in the above-described reaction may comprise a mixture of compounds each of the general formula (VIII), e.g., a mixture of acrylic acid and methacrylic acid. Likewise, the chlorosilane co-reactant may be a mixture of chlorosilane species each of the general formula (IX) above, e.g., a mixture of chloromethyldimehylchlorosilane and chloromethyldiphenylchlorosilane. In such instance, the product silyl diacrylate will likewise comprise a mixture of correspondingly differently substituted silyl diacrylate compound species.

It may also be desirable in some instances to carry out the acrylic acid/chlorosilane reaction so as to form a difunctional capper containing both acryloxy functionality and other, "inert" functionality. For example, the reaction may be carried out using a mixture of acrylic acid and acetic acid for reaction with the chlorosilane, whereby the reaction product will include diacrylate capper of the general formula (VI) above, as well as capper compounds containing two acetoxy functionalities and capper compounds containing both acetoxy and acryloxy functionality in the same molecule. In his manner, it is possible to use the reaction product silane cappers in mixture with one another to polyfunctionalize the silicone in accordance with this embodiment of the present invention.

The acetoxy-functional silane compound which is described hereinabove as a preferred inert (second silane) capper species in the practice of the present invention, may suitably be synthesized in a manner analogous to the synthesis of the acrylic-functional capper, with the use of acetic acid in place of acrylic acid in the synthesis methodology described herein for the acrylic capper. Other carboxylic acids could also be used, in lieu of acetic acid, to produce other inert (second silane) capper species.

Generally, and preferably, the reaction of the acrylic acid compound(s) and the chlorosilane compound(s) is conducted in a diluent medium, preferably a non-reactant hydrocarbon or halohydrocarbon medium, e.g., heptane. Generally, and preferably, the reaction volume is stirred during the reaction, such as may be accommodated by the provision of mechanical mixing means in the reaction vessel.

In carrying out the reaction of the acrylic acid compound(s) with the chlorosilane compounds, it is generally advantageous to use a base such as triethylamine to function as a hydrogen chloride acceptor, thereby removing the hydrogen chloride formed in the reaction. In some instances, it may be feasible to remove the hydrogen chloride by-product by sparging the reaction mixture with nitrogen, whereby the passage of nitrogen through the mixture removes he hydrogen chloride.

The reaction may be carried out at any suitable temperature: generally, temperatures on the order of from about 25° C to about 100° C are usefully employed, and preferably from about 25° C to about the reflux temperature of the diluent medium in which the reaction is carried out, e.g., about 100° C for heptane as the diluent medium. The time required to carry out the reaction may be readily determined for a given reaction system by simple analytical tests without undue experimentation, and the reaction time may be varied as necessary or desirable in a given application. By way of example, the reaction may be carried out in approximately 3-4 hours in a diluent medium of heptane at reflux temperatures. After the reaction has been carried out, the reaction mixture may optionally be subjected to vacuum stripping or other suitable treatment for the removal of residual acrylic acid from the reaction mixture, as and to the extent desired.

It will be appreciated that the synthesis methodology of the present invention achieves a substantial advance in the art over the prior art practice of capping the silicone by reacting it with an isomeric mixture of acryloxy-propenyldimethylchlorosilanes, as described hereinabove in the "Background of the invention" section hereof. In the prior art synthesis, the generation of hydrochloric acid necessitates the addition of an amine in the process to function as the acid acceptor, resulting in a complexed amine hydrochloride solid which then must be filtered from the viscous capped silicone polymer, a step which is time-consuming, difficult, and costly.

By contrast, in he practice of the present invention, the synthesis of the capper per se is associated with the generation of hydrogen chloride, which then can be base amine complexed in the reaction mixture. Accordingly, whereas filtration of the capped polymer is required by the prior art synthesis method, the amine-complexed hydrogen chloride solid in the practice of the present invention is readily removable by filtration from the relatively lowviscosity capper material, before the capper is reacted with the silicone, thereby achieving a significant advantage over the prior art methodology, in terms of processing time, ease of synthesis, and cost of the capped silicone product.

It will also be appreciated that the specific reaction scheme described above for capping a silicone by reaction with a silyl diacrylate compound, is an aspect of a capping methodology which may be broadly applied in the capping of silicones with other capping species, utilizing a carboxyl functional capper precursor which is reactive with a chlorosilane compound to yield he desired capper.

Thus, the present invention comprehends a method of capping a silicone having a cappable moiety in its structure, comprising the steps of:
(i) reacting a carboxyl functional capper precursor with a chlorosilane compound to yield as a reaction product a silyl capper compound which is cappingly reactive with the cappable moiety of the silicone; and
(ii) reacting the silyl capper compound with the cappable moiety of the silicone to yield a capped silicone product.

The above-described broad capping methodology may for example be used to impart acetoxy functionality to a silicone, by reacting acetic acid with a dichlorosilane compound to yield as reaction product a diacetoxysilane. This resulting capper compound can be reacted with a silicone containing interior, terminal and/or pendant hydroxyl functionality (or other labile hydrogen-containing functionality) to yield an acetoxy-functionalized silicone which is believed to be an inert (non-reactive) siloxane. Other suitable carboxyl functional capper precursors may be employed to yield silyl cappers of desired functionality which in turn may be employed to correspondingly functionalize the silicone, in order to impart a desired cure modality thereto, or otherwise to appropriately functionalize the silicone for its intended purpose.

The features and advantages of the present invention are more fully illustrated by the following non-limiting examples, wherein all parts and percentages are by weight, unless otherwise expressly stated.

### EXAMPLE 1

A 12 liter three neck round bottom flask equipped with a mechanical stirrer, and condenser, was charged with 7.5 liters of heptane. 720 ml acrylic acid, 1900 ml triethylamine and 616 g of chloromethyldimehylchlorosilane then was sequentially added to the heptane solution under nitrogen atmosphere. The mixture was stirred at 100° C for 5 hours and then filtered and stripped to give 929 g of the crude acryloxymethyldimethylacryloxysilane. GC analysis indicated the crude materials had a high purity of >90%. The crude product can be further vacuum distilled at 0.5 mmHg and ∼70° C to improve its purity, if necessary.

### EXAMPLES 2-8

Samples of acryloxymethyldimethylacryloxysilane prepared in accordance with the procedure of Example 1 were mixed in various ratios with a hydroxy-ended polydimethylsiloxane having a viscosity of 2000 cps., at room temperature for 15 minutes. To each mixed sample was further added 1.5 (w/w) diethoxyacetophenone. The mixtures then were cast as 75 mil films and irradiated for one minute per side with 70 mW/cm² UV radiation using a medium pressure mercury vapor lamp. The hardness values of the photocured films then were determined using a Shore 00 Durometer. Results are shown in Table I below, including the equivalents ratio of acryloxy functionality to acryloxy-reactive functionality in each sample.

**TABLE 1**

| Example | Wt. of Capper (Example 1) | Wt. of Silicone | Shore 00 Durometer Hardness | Equivalents Ratio |
|---|---|---|---|---|
| Example 2 | 1.8 g | 150 g | No Cure | 0.5 |
| Example 3 | 2.7 g | 150 g | 28 | 0.75 |
| Example 4 | 3.6 g | 150 g | 57 | 1.0 |
| Example 5 | 4.5 g | 150 g | 61 | 1.25 |
| Example 6 | 5.4 g | 150 g | 75 | 1.50 |
| Example 7 | 6.3 g | 150 g | 76 | 1.75 |
| Example 8 | 7.2 g | 150 g | 76 | 2.0 |

### EXAMPLES 9-11

Samples of the acryloxymethyldimethylacryloxysilane capper of Example 1 were mixed in various ratios at room temperature for 5 minutes with a hydroxyl-ended polydimethylsiloxane having a viscosity of 3500 cps. The mixtures then were vacuum stripped at 100° C for 30 minutes. Thirty-two percent (w/w) of a surface treated hydrophobic fumed silica (surface area = 150 m₂/g) then was added to each of the mixtures and the mixtures were further mixed at room temperature for 15 minutes. To each of the mixtures was further added 1.5% diethoxyacetophenone, with 10 minutes additional mixing. The mixtures then were cast as 75 mil films and irradiated with 70 mW/cm² UV light using a medium pressure mercury vapor lamp. The hardness, tensile strength, and elongation of the cured elastomers ere determined. Results are shown in Table II below.

**TABLE II**

| Example | Wt. Capper (Example 1) | Wt. of Silicone | Wt. of Silica | Durometer Shore A Hardness | Tensile Strength (psi) | Elongation (%) |
|---|---|---|---|---|---|---|
| Example 9 | 3.10 g | 150 g | 48 g | 24 | 591 | 391 |
| Example 10 | 3.60 g | 150 g | 48 g | 34 | 786 | 359 |
| Example 11 | 4.10 g | 150g | 48g | 41 | 878 | 333 |

### EXAMPLE 12

Example 1 was repeated but using methacrylic acid instead. Thus, in a 1000 ml round bottom flask, 600 ml of heptane, 20 ml of methacrylic acid, and 35 ml of triethylamine were sequentially added with stirring. To this mixture was further added 14.3 g chloromethyldimethylchlorosilane. The mixture then was heated to 100° C for 4 hours. The mixture was cooled and filtered to remove the triethylamine hydrochloride salt and stripped to remove the solvent and yield 35 g of a crude yellowish liquid. Fifteen grams of this crude liquid were added to 150 g of hydroxyl-ended polydimethylsiloxane with a viscosity of 3500 cps. The mixture was stirred and then stripped at 60° C, 0.5 mm Hg for one hour. One percent (w/w) of diethoxyacetophenone was added to this mixture, and a 75 mil film was cast. The film was irradiated with a 70 mW/cm² UV light for 2 minutes per side using a medium pressure mercury lamp. The film photocured to an elastomer with a hardness of 62 as measured by Shore (00) Durometer.

### EXAMPLE 13

The formulations of sealants shown in Table III below were made up, in which Sealant A and Sealant B were of identical composition except for the acrylic functionality-capped silicones therein. Sealant A employed a silicone polymer (Polymer A) which was formed by reacting a 28,000 weight average molecular weight hydroxy-terminated polydimethylsiloxane with an isomeric mixture of acryloxypropenyldimethylchlorosilane of formulas (I) and (II) described hereinabove, in a weight ratio of 75-80% (I) to 25-20% (II). Sealant B employed a silicone polymer (Polymer B) which was formed by reacting a hydroxy-terminated 28,000 weight average molecular weight polydimethylsiloxane with a capper of formula (VI), acryloxymethyldimethylacryloxychlorosilane, in accordance with the present invention. Both silicone polymers were fully capped, as shown by the absence of any detectable free silanol (SiOH) functionality.

**TABLE III**

| | Sealant A | Sealant B |
|---|---|---|
| Polymer | Polymer A | Polymer B |
| | 3.50 kg | 3.50 kg |
| | 75.0 % | 75.0 % |
| Fumed Silica | 1.10 kg | 1.10 kg |
| | 23.5 % | 23.5 % |
| Diethoxyacetophenone | 71.2 g | 71.2 g |
| (DEAP) photoinitator | | |
| | 1.5 % | 1.5 % |
| Stabilizer^{a} | 1.50 g | 1.50 g |
| | 0.03 % | 0.03 % |
| Total | 4.67 kg | 4.67 kg |

| | | |
|---|---|---|
| ^{a} = 1:1 50% BHT in toluene: 50% MEHQ in IPA | | |

The silicone fluid used to prepare Polymer A and Polymer B was Mazer Masil™ SFR 3500 cps hydroxy terminated polydimethylsiloxane silicone fluid. The fumed silica filler was Wacker HDK-2000 treated fumed silica. The photoinitiator was Upjohn diethoxyacetophenone (DEAP). The stabilizers used In these sealant formulations were Eastman Kodak 4-methoxyphenol (MEHQ) and Eastman Kodak 4-methyl-2,6-di-t-butylphenol (BHT).

The capper which was used to prepare the capped silicone polymer for Sealant B was made by the following procedure. 143 g (1.0 mole) of chloromethyldimehylchlorosilane (Petrarch Systems) was reacted with a mixture of 150 g (2.1 moles) acrylic acid (Aldrich 99% grade) and 215 g (2. 13 moles) triethylamine (Aldrich 99% grade) to 1000 g n-heptane (J.T. Baker) at reflux for 4 hours. Heptane, acrylic acid, and triethylamine were first added to a round bottom flask with a mechanical stirrer, nitrogen bubbler, condenser, and heating mantle. The chloromethyldimethylsilane then was added to the flask. The reaction mixture was stirred for 4 hours at reflux. The product mixture then was cooled and filtered to remove the triethylamine hydrochloride Solvents were removed by distillation under reduced pressure.

The reaction yield is essentially quantitative but the actual yield depends much upon the amount of product loss during filtration and stripping. The product capper, acryloxymethyldimethylacryloxysilane, is very reactive with water. It should be stored in a tightly sealed glass container. Although quite stable at room temperature, the capper may advantageously be refrigerated to ensure shelf-life. Acrylate polymerization inhibitor such as 400 ppm 4-methoxyphenol (MEHQ) is desirably added to the capper.

Polymer B was prepared by mixing 3500 cps hydroxy silicone fluids with the acryloxymethyldimethylacryloxysilane capper. The molar excess of capper is 0% based on the assumed 28,000 molecular weight of the silicone fluid (71 µeq) or 545 based on molecular weight derived from FTIR silanol analysis (46 µeq). Although heat is not necessarily required during the capping reaction it is generally desirable to ensure full end-capping. The capped silicone product was heated for 3 hours under vacuum (1mm Hg). The resulting capped silicone was then wipe film evaporated with two passes to remove most of the low molecular weight components.

Polymer A was made by an analogous procedure, using an isomeric mixture of compounds of formulae (I) and (II) as the capping species.

The sealants. Sealant A and Sealant B, were made in a Jaygo Mixer using the same batch size as well as heating, mixing, and vacuum conditions in both cases. The capped silicone fluid in each case was charged to the mixer kettle, and fumed silica was added. After the "wetting" of the fumed silica, the batch was mixed for two hours under vacuum while full steam was applied to the kettle jacket. The batch then was cooled, and the remaining ingredients were added. After a short, gentle mixing under vacuum, the batch was transferred into cartridges. Slabs of sealant, 5" x 5" x 0.075" steel frame between a 1 mm polyethylene sheet and then two 1/4" glass plates. The samples were secured with clamps and then exposed to 75 mW/cm² light (medium pressure mercury lamp) for one minute on each side to effect curing thereof. The following physical properties of the cured materials were determined: durometre (Shore A hardness), tensile strengh, elongation, and modulus at 100% and 200% elongation. The results are shown in Table IV below. The tabulated values for tensile strength, % elongation, and modulus are median values based on measurement of five samples in each instance.

**TABLE IV**

| | Sealant A | Sealant B |
|---|---|---|
| Durometer, Shore A Hardness | 34 | 36 |
| Tensile strength. psi | 454 | 689 |
| % Elongation | 277 | 310 |
| Modulus @ 100% Elongation | 116 | 144 |
| Modulus @ 200% Elongation | 279 | 359 |
| Hexane Extractables, % | 4.5 | 4.2 |

The above results indicate that while both Sealant A and Sealant B yield good initial cured properties. Sealant B was clearly superior to Sealant A.

### EXAMPLE 14

To 60 g of hydroxy-terminated polymethylphenylsiloxane (viscosity = 2400 cps: Baysilone polymer 3176) was added 2.2 g acryloxymethyldimethylacryloxysilane and 0.6 g diethoxyacetophenone at room temperature. The mixture was stirred for 30 seconds and de-aired for 5 minutes. The mixture then was cast in a 75 mil thickness film and irradiated in a medium pressure mercury vapor UV chamber for 1 minute per side with a 70 mW/cm² UV intensity. The material cured to an elastomer having a Shore (00) durometer hardness of 62.

In general, the capped silicone compositions of the present invention displayed excellent cured characteristics, and also exhibited superior performance results in a variety of evaluation tests, including humidity aging, heat aging, oil immersion, and antifreeze immersion, both initially and after extended exposure to the test conditions.

### EXAMPLE 15

Acryloxymethyldimethylacryloxysilane was prepared in accordance with the procedure of Example 1, and acetohymethyldemethylacetoxysilane was prepared by the same procedure using acetic acid in place of acrylic acid.

Acryloxymethyldimethylacryloxysilane (5.76 g) and acetoxymethyldimethylacetosysilane (5.44 g) were mixed and added to a silanol-terminated polydimethylsiloxane (468 g; viscosity = 2.000 cps) at room temperature. The mixture was heated to 60 C for one hour. Methanol (8.06g) then was added. The mixture was further stirred at 60 C or one hour, following which the mixture was vacuum stripped to remove all volatile materials therefrom. The resulting material was mixed with photoinitiator and UV cured to produce a soft gel, which was too soft to measure its hardness using a durometer gauge.

### EXAMPLE 16

To 60 g of hydroxy-terminated polymethylphenylsiloxane (viscosity = 2400 cps: Baysilone Polymer 3176) was added 2.2 g acryloxymethyldimethyl acryloxysilane and 0.6 g diethoxyacetophenone at room temperature. The mixture was stirred for 30 seconds and de-aired for 5 minutes. The mixture then was cast in a 75 mil thickness film and irradiated in a medium pressure mercury vapor UV chamber for 1 minute per side with a 70 mW/cm² UV intensity. The material cured to an elastomer having a Shore (00) durometer hardness of 62.

### EXAMPLE 17

For comparison purposes, a silanol-terminated polydimethylsiloxane of the type used in Example 15 was fully capped with acryloxymethyldimethylacryloxysilane (prepared in accordance with the procedure of Example 1). Following UV cure, his fully endcapped material had a durometer (00) reading of 75.

The foregoing examples show that the silyl diacrylate compound is an effective capper for imparting UV radiation curable character to a silanol-terminated silicone, and that when used in combination with acetoxymethyldimethylacetohysilane as an inert capper, as in Example 15, the resulting capped silicone when photocured under UV radiation yielded a soft gel product. By contrast, a substantially hard, tough material was produced by completely capping a corresponding silicone with only the acrylic capper (Example 17).

### EXAMPLE 18

Acryloxymehyldimethylacryloxysilane was prepared in accordance with the general procedure of Example 1, but with the reaction product having an estimated purity of 70% of silyl diacrylate capper therein.

To 50 g of silanol-terminated polydimethylsiloxane (viscosity = 3500 cps), the following materials were sequentially added and mixed at room temperature.
(1) 5.5 g of the silyl diacrylate capper;
(2) 8.6 g of ethyltriacetoxysilane; and
(3) 2.5 g of diethoxyacetophenone.

The resulting mixture, after de-airing, was photocured under a Fusion lamp using a H-bulb to give a soft gel, too soft to measure its hardness. After standing at ambient temperature for 1.5 hours, the material gave a durometer (00) reading of 35. After three hours, the hardness was 54, and after standing overnight the hardness increased to 65.

### EXAMPLE 19

A silicone composition was made up in accordance with the procedure of Example 18. The uncured mixture when left in ambient condition formed a soft gel in 30 minutes. After standing overnight, the mixture cured to a soft rubber with a hardness value of 13 (durometer (00)). The soft rubber was further UV cured under the Fusion Lamp to a hardness of 69.

The foregoing examples 18 and 19 show that the silyl diacrylate compound was an effective capper for imparting UV radiation curable character to the silanol-terminated silicone, and that the ethyltriacetoxysilane capped the residual silanol functionality of the silicone to impart moisture curability to the polymer. In this manner, a silicone polyfunctionalized for UV and moisture curing was produced, and the resulting composition was effectively cured by initial radiation curing and final ambient moisture curing (Example 18), as well as by ambient moisture curing followed by UV radiation curing (Example 19).

## Claims

1. A method of capping silicone, comprising reacting:
(i) a silyl diacrylate compound of the formula: 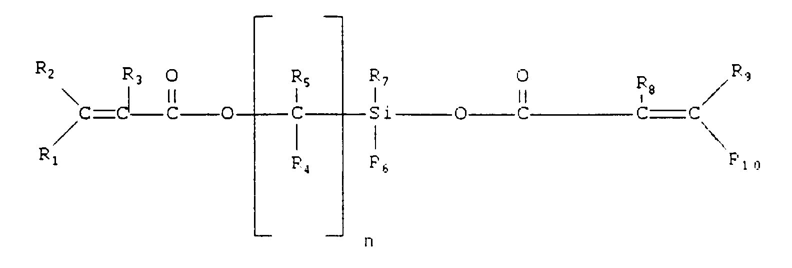 wherein:
R₁, R₂, R₃, R₄, R₅, R₆, R₇, R₈, R₉, and R₁₀ are independently hydrogen, halo, C₁ - C₈ alkyl or phenyl radicals; and n is an integer having a value of from 1 to 4; with:
(ii) a silicone having at least one functionality which is reactive with said silyl diacrylate compound to yield a capped silicone with capping moieties of the formula: 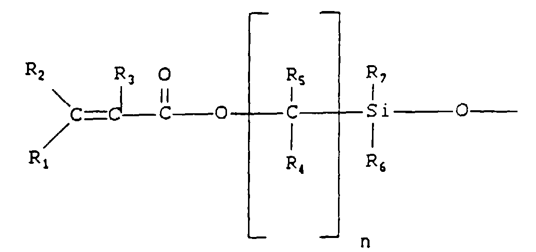 bonded to the silicone wherein R₁, R₂, R₃, R₄, R₅, R₆, R₇ and n are as defined above.

2. A method of capping silicone according to claim 1 wherein the silyl diacrylate is non-hydrolysingly reacted with the silicone.

3. A method of capping silicone as claimed in claim 2 wherein the silicone has:
(a) functionality which is reactive with an acryloxy functionality of said silyl diacrylate compound to yield said capped silicone, wherein said capping moieties have the formula: 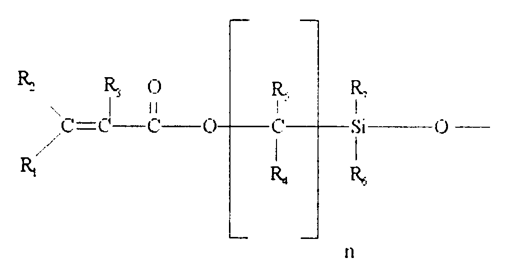 wherein:
R₁, R₂, R₃, R₄, R₅, R₆, R₇ are as defined above, said capped silicone which is partially curable under first curing conditions comprising curingly effective radiation exposure optionally in the presence of a photoinitiator; and
(b) additional functionality, which renders said capped silicone partially curable by second curing conditions different from the curingly effective radiation exposure of the first curing conditions.

4. A method of capping silicone as claimed in claim 3, wherein said additional functionality is:
vinyl;
hydrogen;
enoloxy;
alkoxy;
aryloxy;
oxime;
-OOCR₃₃;
N,N-dialkylamino;
N,N-dialkylaminoxy;
N-alkylamido;
-O-NH-C(O)-R₃₃; 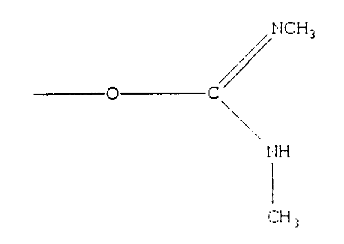
-O-C(CH₃)=CH₂; or
-S-C₃H₆Si(OCH₃)₃;
wherein R₃₃ is H or hydrocarbyl.

5. A method of capping silicone as claimed in claim 4, wherein said silicone functionality (b) is selected from methoxy, oxime and acetoxy.

6. A method of capping silicone as claimed in claim 3, wherein said silicone functionality (b) comprises silanol functionality, and said silanol functionality is reacted with a co-reactant comprising a silane of the formula: 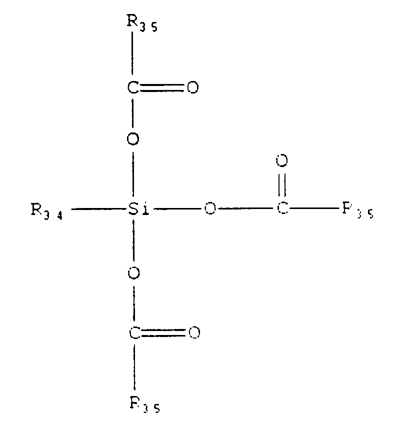 wherein:
R₃₄ is C₁-C₈ alkyl, or 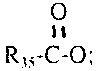 and
each R₃₅ is independently hydrogen or C₁-C₈ alkyl.

7. A method of capping silicone as claimed in any of claims 3 to 6 or a composition as claimed in claim 19 or 20, wherein R₁, R₂, R₃, R₄, R₅, R₈, R₉, and R₁₀ are independently hydrogen, halo or C₁-C₈ alkyl radicals, and R₆ and R₇ are independently hydrogen, halo, C₁-C₈ alkyl, or phenyl radicals.

8. A method of capping silicone or composition as claimed in claim 7 wherein:
R₁, R₂, R₉ and R₁₀ are hydrogen;
R₃, R₄, R₅ and R₈ are independently hydrogen or C₁-C₈ alkyl;
R₆ and R₇ are independently C₁-C₈ alkyl or phenyl; and
n is 1.

9. A method of capping silicone or composition as claimed in claim 8 wherein:
R₁, R₂, R₄, R₅, R₉ and R₁₀ are hydrogen;
R₃ and R₈ are independeiitly hydrogen or methyl;
R₆ and R₇ are methyl; and
n is 1.

10. A method of capping silicone or composion as claimed in claim 9 wherein said silyl diacrylate (i) has the formula: 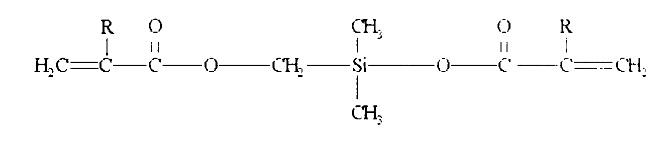 wherein:
R is H or methyl.

11. A method of capping silicone or silicone composition as claimed in any of claims 3 to 10 or 19 or 20 wherein said silicone functionality which is reactive with the acryloxy functionality of the silyl diacrylate compound, is a functionality selected from:
-OH;
-N(R')₂, wherein each of the R' substituents is independently selected from hydrogen, C₁-C₈ alkyl and phenyl groups, with the proviso that at least one R' substituent is hydrogen;
-SH;
-SO₃H; or
where the silyl diacrylate compound is present with residual acrylic acid groups, 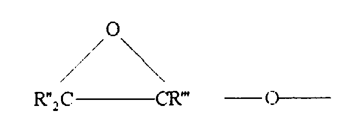
wherein each or the R" and R"' substituents is independently hydrogen, or C₁ - C₈ alkyl or phenyl groups.

12. A method of capping silicone or silicone composition as claimed in any of claims 3 to 11 which comprises an effective amount of photoinitiator selected from benzophenone, benzoin, acetophenone, benzil, and their substituted forms, or mixture thereof.

13. A method of capping silicone according to claim 2 wherein the silicone having active hydrogen-containing functionality is non-hydrolyzingly reacted with acrylic functionality to yield a photocurable capped silicone capped with capping moieties deriving from the silyl diacrylate compound, wherein said capping moieties have the formula: 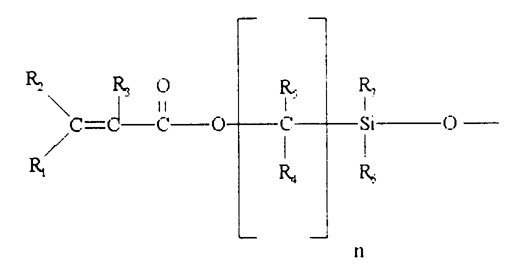 wherein R₁, R₂, R₃, R₄ , R₅ , R₆ , R₇ are as defined above.

14. A method of capping a silicone having active hydrogen-containing functionality with (i) acrylic functionality to render the silicone photocurable in character, and with (ii) non-reactive functionality, comprising reacting the active hydrogen-containing functionality of said silicone with:
(a) a silyl diacrylate compound of the formula: 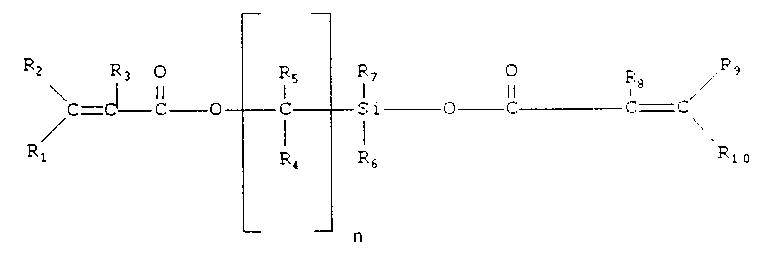 wherein:
R₁, R₂, R₃, R₄, R₅, R₆, R₇, R₈, R₉, and R₁₀ are independently hydrogen, halo, C₁ - C₈ alkyl or phenyl radicals; and n is an integer having a value of from 1 to 4; and
(b) a silane compound of the formula: 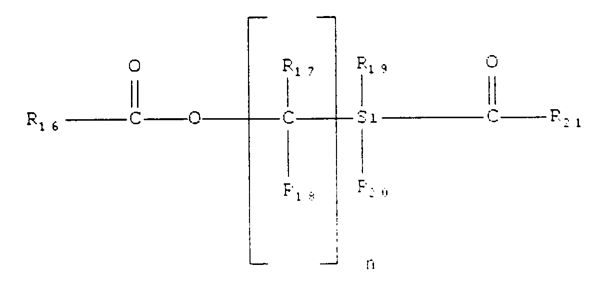 wherein:
R₁₆ and R₂₁ are non-polymerizable groups and are independently halo, C₁ - C₈ alkyl or phenyl radicals; and
R₁₇, R₁₈, R₁₉, and R₂₀ are independently hydrogen, halo, C₁-C₈ alkyl or phenyl radicals,
to yield a capped silicone having from 50% to 98% of the active hydrogen-containing functionality of the silicone capped with capping moieties of the formula: 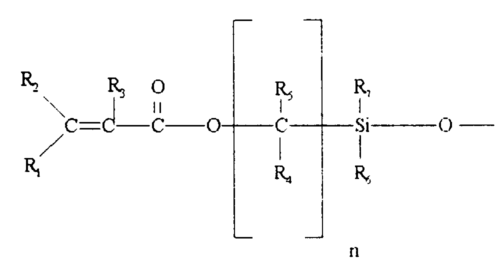 wherein:
R₁, R₂, R₃, R₄, R₅, R₆, R₇ are as defined above, and the remainder of the active hydrogen-containing functionality of the silicone capped with capping moieties derived from said silane compound.

15. A method of making a silicone composition which is photocurable under photocuring conditions optionally including the presence of a suitable photoinitiator therefor, comprising:
(i) reacting
(a) an acrylic acid compound of the formula: 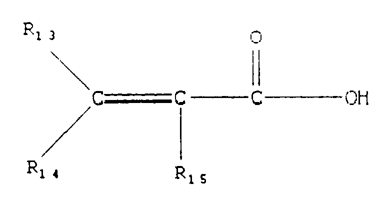 wherein:
R₁₃, R₁₄ and R₁₅ are independently hydrogen, halo, C₁ - C₈ alkyl or phenyl radicals, with
(b) a chlorosilane compound of the formula: 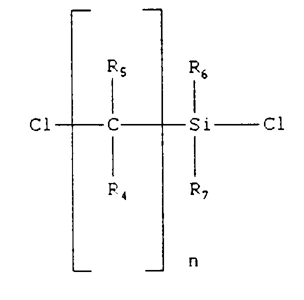 wherein:
R₄, R₅, R₆ and R₇ are independently hydrogen, halo, C₁ - C₈ alkyl or phenyl radicals; and n is an integer of from 1 to 4;
to yield a silyl diacrylate compound of the formula: 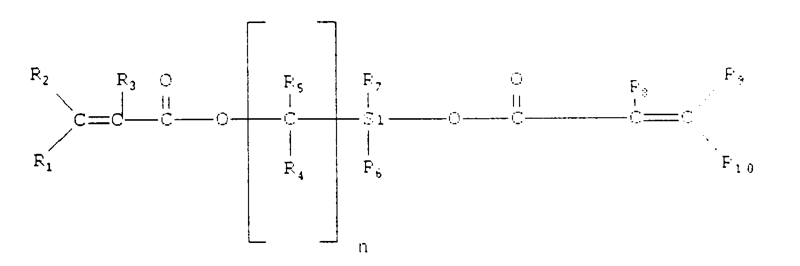 wherein:
R₁, R₂, R₃, R₄, R₅, R₆, R₇, R₈, R₉, and R₁₀ are independently hydrogen, halo, C₁ - C₈ alkyl or phenyl radicals; and n is an integer having a value of from 1 to 4; and
(ii) non-hydrolyzingly reacting the silyl diacrylate compound with a silicone having at least one functionality which is reactive with an acryloxy functionality of the silyl diacrylate compound to yield an acryloxy-functional capped silicone as the silicone composition, wherein the acryloxy-functional capped silicone is capped with capping moieties of the formula: 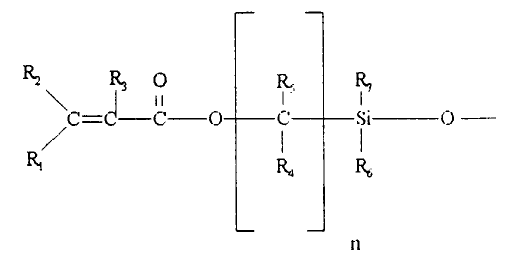 wherein:
R₁, R₂, R₃, R₄, R₅, R₆, R₇ are as defined above.

16. A photocured product formed by exposure of the photocurable silicone or silicone composition as obtained in any of claims 3 to 12 to radiation exposure conditions curingly effective therefor.

17. A cured silicone formed by subjecting the composition obtained in any of claims 3 to 12 to photocuring by exposure conditions curingly effective therefor and by additional curing conditions further curingly effective therefor to produce a fully cured silicone composition.

18. A method of forming a capping composition containing acryloxy capping functionality and non-polymerizable capping functionality, comprising: reacting
(a) a first acid selected from acrylic acid or acrylic acid derivatives,
(b) a second acid selected from carboxylic acids or carboxylic acid derivatives, wherein the second acid is devoid of any acrylic or other polymerizable functionality, and
(c) a chlorosilane compound of the formula: 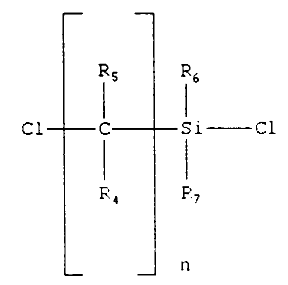 wherein:
R₄, R₅, R₆ and R₇ are independently selected from hydrogen, halo, C₁-C₈ alkyl and phenyl radicals; and n is an integer of from 1 to 4;
under effective reaction conditions therefor, to yield said capping composition as the reaction product.

19. A silicone composition, comprising:
(i) a first silane of the formula: 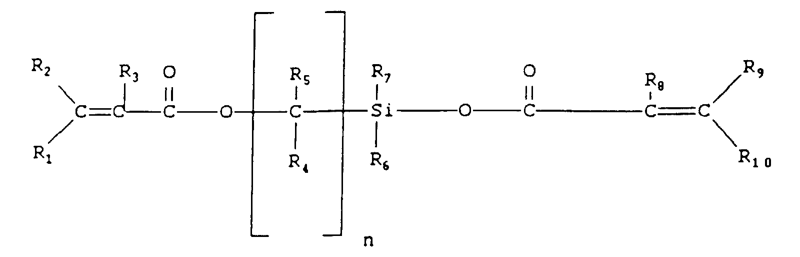 wherein:
R₁, R₂, R₃, R₄, R₅, R₆, R₇, R₈, R₉, and R₁₀ are independently hydrogen, halo, C₁ - C₈ alkyl or phenyl radicals; and n is an integer having a value of from 1 to 4; and
(ii) a second silane of the formula: 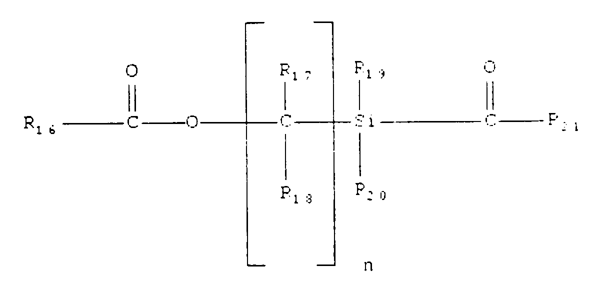 wherein:
R₁₆ and R₂₁ are non-polymerizable groups and are independently halo, C₁ - C₈ alkyl or phenyl radicals;
R₁₇, R₁₈, R₁₉ and R₂₀ are independently hydrogen, halo, C₁ - C₈ alkyl or phenyl radicals; and
n is an integer having a value of from 1 to 4; and
(iii) a polysiloxane having at least two functional groups per molecule with which said first and second silanes are cappingly reactive;
wherein:
(a) the first and second silanes together are provided in sufficient quantity relative to said polysiloxane to react with substantially all of the cappingly reactive functional groups of the polysiloxane; and
(b) the first silane constitutes from 50% to 98% by weight of the total weight of the first and second silanes.

20. A composition according to claim 19, additionally comprising:
(iv) a third silane of the formula: 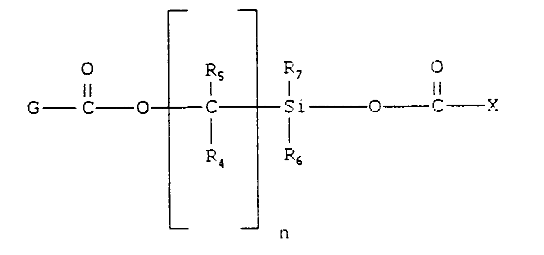 wherein:
R₄, R₅, R₆ and R₇ and have the same meanings as in the first silane formula;
one of the G and X groups is 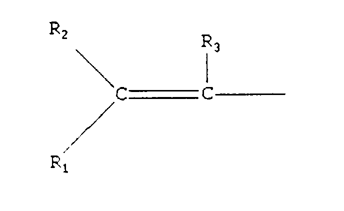 wherein:
R₁ R₂ and R₃ have the same meanings as in the first silane formula, and the other of the G and X groups is R₁₆ having the same meaning as in the second silane formula.

## Patentansprüche

1. Verfahren zum Verkappen von Silicon, umfassend die Umsetzung
(i) einer Silyldiacrylatverbindung der Formel: 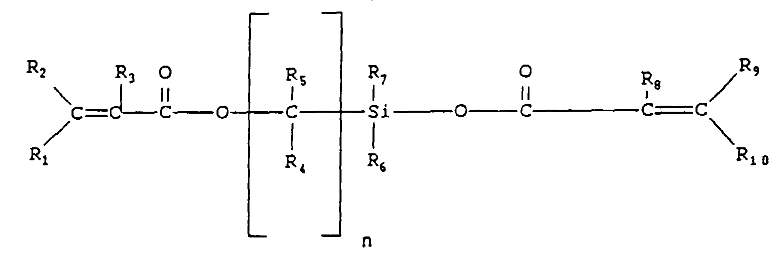 worin:
R₁, R₂, R₃, R₄, R₅, R₆, R₇, R₈, R₉ und R₁₀ unabhängig Wasserstoff-, Halogen-, C₁-C₈-Alkyl- oder Phenylreste sind und n eine ganze Zahl mit einem Wert von 1 bis 4 ist, mit
(ii) einem Silicon mit wenigstens einer Funktionalität, die mit der genannten Silyldiacrylatverbindung reaktiv ist, um ein verkapptes Silicon mit verkappenden Resten der Formel: 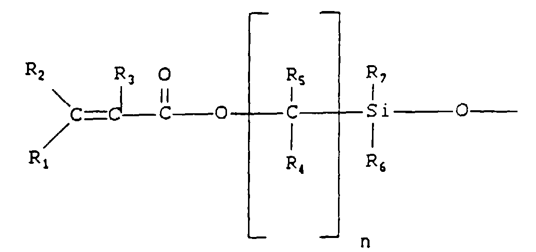 zu ergeben, die an das Silicon gebunden sind, wobei R₁, R₂, R₃, R₄, R₅, R₆, R₇ und n wie oben definiert sind.

2. Verfahren zum Verkappen von Silicon gemäß Anspruch 1, worin das Silyldiacrylat nichthydrolysierend mit dem Silicon umgesetzt wird.

3. Verfahren zum Verkappen von Silicon gemäß Anspruch 2, bei dem das Silicon
(a) eine Funktionalität besitzt, die mit einer Acryloxyfunktionalität der genannten Silyldiacrylatverbindung reaktiv ist, um das genannte verkappte Silicon zu ergeben, wobei die verkappenden Reste die Formel: 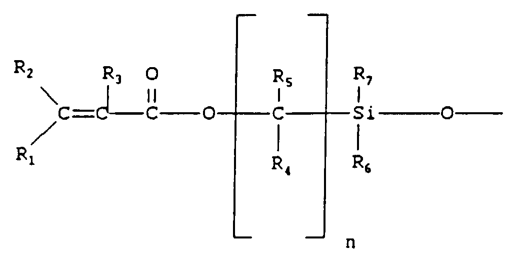 haben, worin:
R₁, R₂, R₃, R₄, R₅, R₆, R₇ wie oben definiert sind, wobei das verkappte Silicon unter ersten Härtungsbedingungen, die das Einwirkenlassen von die Härtung bewirkender Strahlung gegebenenfalls in Gegenwart eines Photoinitiators umfassen, teilweise härtbar ist, und
(b) eine zusätzliche Funktionalität besitzt, die das genannte verkappte Silicon durch zweite Härtungsbedingungen, die sich von dem Einwirkenlassen von die Härtung bewirkender Strahlung bei den ersten Härtungsbedingungen unterscheiden.

4. Verfahren zum Verkappen von Silicon nach Anspruch 3, worin die zusätzliche Funktionalität
Vinyl,
Wasserstoff
Enoloxy,
Alkoxy,
Aryloxy,
Oxim,
-OOCR₃₃,
N,N-Dialkylamino,
N,N-Dialkylaminoxy,
N-Alkylamido,
-O-NH-C(O)-R₃₃, 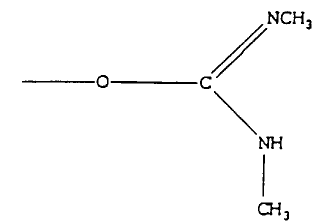
-O-C(CH₃)=CH₂ oder
-S-C₃H₆Si(OCH₃)₃ ist,
wobei R₃₃ H oder ein Kohlenwasserstoffrest ist.

5. Verfahren zum Verkappen von Silicon nach Anspruch 4, worin die genannte Siliconfunktionalität (b) ausgewählt ist aus Methoxy, Oxim und Acetoxy.

6. Verfahren zu Verkappen von Silicon nach Anspruch 3, worin die genannte Siliconfunktionalität (b) eine Silanolfunktionalität umfaßt und die genannte Silanolfunktionalität mit einem Coreaktanden umgesetzt wird, der ein Silan der Formel: 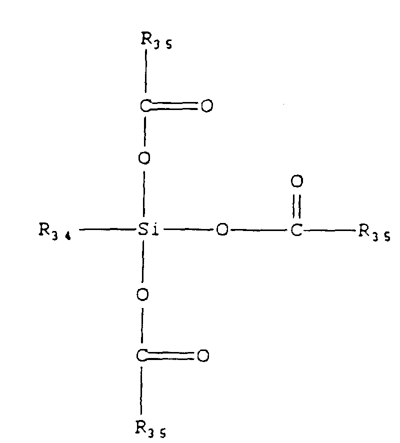 umfaßt, worin:
R₃₄ C₁-C₈-Alkyl oder 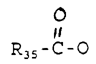 ist und jeder Rest R₃₅ unabhängig Wasserstoff oder C₁-C₈-Alkyl ist.

7. Verfahren zum Verkappen von Silicon nach irgendeinem der Ansprüche 3 bis 6 oder einer wie in Anspruch 19 oder 20 beanspruchten Zusammensetzung, worin R₁, R₂, R₃, R₄, R₅, R₈, R₉ und R₁₀ unabhängig Wasserstoff-, Halogen- oder C₁-C₈-Alkylreste sind und R₆ und R₇ unabhängig Wasserstoff-, Halogen, C₁-C₈-Alkyl- oder Phenylreste sind.

8. Verfahren zum Verkappen von Silicon oder einer Zusammensetzung nach Anspruch 7, worin:
R₁, R₂, R₉ und R₁₀ Wasserstoff sind,
R₃, R₄, R₅ und R₈ unabhängig Wasserstoff oder C₁-C₈-Alkyl sind,
R₆ und R₇ unabhängig C₁-C₈-Alkyl oder Phenyl sind und
n 1 ist.

9. Verfahren zum Verkappen von Silicon oder einer Zusammensetzung nach Anspruch 8, worin:
R₁, R₂, R₄, R₅, R₉ und R₁₀ Wasserstoff sind,
R₃ und R₈ unabhängig Wasserstoff oder Methyl sind,
R₆ und R₇ Methyl sind und
n 1 ist.

10. Verfahren zum Verkappen von Silicon oder einer Zusammensetzung nach Anspruch 9, worin das genannte Silyldiacrylat (i) die Formel: 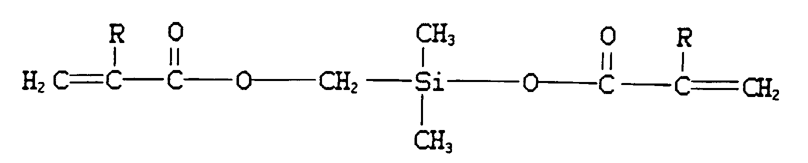 hat, worin:
R H oder Methyl ist.

11. Verfahren zum Verkappen von Silicon oder einer Siliconzusammensetzung nach irgendeinem der Ansprüche 3 bis 10 oder 19 oder 20, worin die genannte Siliconfunktionalität, die mit der Acryloxyfunktionalität der Silyldiacrylatverbindung reaktiv ist, eine Funktionalität ist, ausgewählt aus:
-OH,
-N(R')₂, worin jeder der R'-Substituenten unabhängig ausgewählt ist aus Wasserstoff, C₁-C₈-Alkyl- und Phenylgruppen, mit der Maßgabe, daß wenigstens ein R'-Substituent Wasserstoff ist,
-SH,
-SO₃H, oder
worin die Silyldiacrylatverbindung mit Acrylsäurerestgruppen vorliegt, 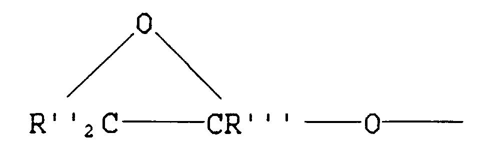 worin die R"- und R"'-Substituenten jeweils unabhängig Wasserstoff oder C₁-C₈-Alkyl- oder Phenylgruppen sind.

12. Verfahren zum Verkappen von Silicon oder einer Siliconzusammensetzung nach irgendeinem der Ansprüche 3 bis 11, welches eine wirksame Menge Photoinitiator umfaßt, ausgewählt aus Benzophenon, Benzoin, Acetophenon, Benzil und deren substituierten Formen oder einer Mischung davon.

13. Verfahren zum Verkappen von Silicon nach Anspruch 2, bei dem das Silicon, das eine aktivwasserstoffhaltige Funktionalität besitzt, nichthydrolysierend mit einer acrylischen Funktionalität umgesetzt wird, um ein photohärtbares verkapptes Silicon zu ergeben, das mit verkappenden Resten verkappt ist, die von der Silyldiacrylatverbindung abgeleitet sind, wobei die verkappenden Reste die Formel: 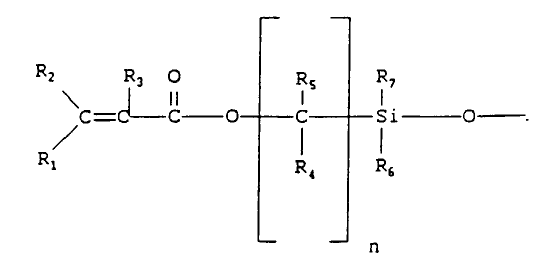 haben, worin R₁, R₂, R₃, R₄, R₅, R₆, R₇ wie oben definiert sind.

14. Verfahren zum Verkappen eines Silicons, das eine aktivwasserstoffhaltige Funktionalität besitzt, mit (i) acrylischer Funktionalität, um dem Silicon photohärtbaren Charakter zu verleihen, und mit (ii) unreaktiver Funktionalität, umfassend die Umsetzung der aktivwasserstoffhaltigen Funktionalität des genannten Silicons mit
(a) einer Silyldiacrylatverbindung der Formel: 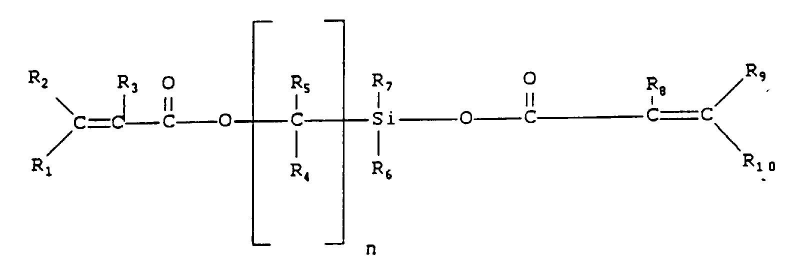 worin:
R₁, R₂, R₃, R₄, R₅, R₆, R₇, R₈, R₉ und R₁₀ unabhängig Wasserstoff-, Halogen-, C₁-C₈-Alkyl- oder Phenylreste sind und n eine ganze Zahl mit einem Wert von 1 bis 4 ist, und
(b) einer Silanverbindung der Formel: 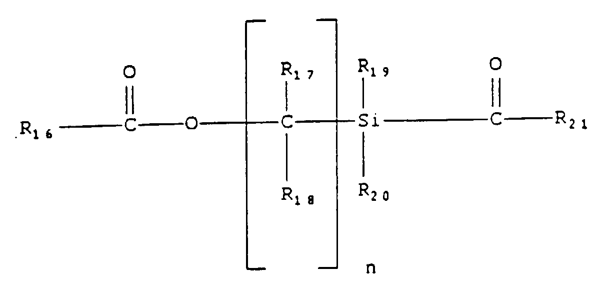 worin:
R₁₆ und R₂₁ nichtpolymerisierbare Gruppen sind und unabhängig Halogen-, C₁-C₈-Alkyl- oder Phenylreste sind und
R₁₇, R₁₈, R₁₉ und R₂₀ unabhängig Wasserstoff-, Halogen-, C₁-C₈-Alkyl- oder Phenylreste sind,
um ein verkapptes Silicon zu ergeben, bei dem 50% bis 98% der aktivwasserstoffhaltigen Funktionalität des Silicons mit verkappenden Resten der Formel: 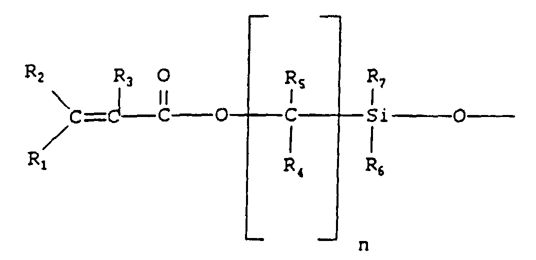 worin:
R₁, R₂, R₃, R₄, R₅, R₆, R₇ wie oben definiert sind,
verkappt sind und der Rest der aktivwasserstoffhaltigen Funktionalität des Silicons mit verkappenden Resten verkappt ist, die von der genannten Silanverbindung abgeleitet sind.

15. Verfahren zur Herstellung einer Siliconzusammensetzung, die unter Photohärtungsbedingungen gegebenenfalls in Gegenwart eines dafür geeigneten Photoinitiators photohärtbar ist, umfassend:
(i) die Umsetzung von
(a) einer Acrylsäureverbindung der Formel: 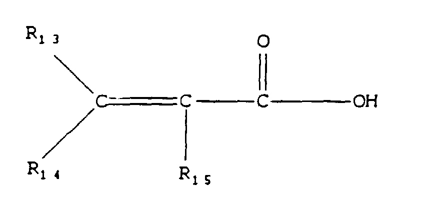 worin:
R₁₃, R₁₄ und R₁₅ unabhängig Wasserstoff-, Halogen-, C₁-C₈-Alkyl- oder Phenylreste sind, mit
(b) einer Chlorsilanverbindung der Formel: 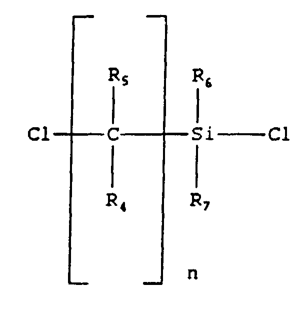 worin:
R₄, R₅, R₆ und R₇ unabhängig Wasserstoff-, Halogen-, C₁-C₈-Alkyl- oder Phenylreste sind und n eine ganze Zahl von 1 bis 4 ist,
um eine Silyldiacrylatverbindung der Formel: 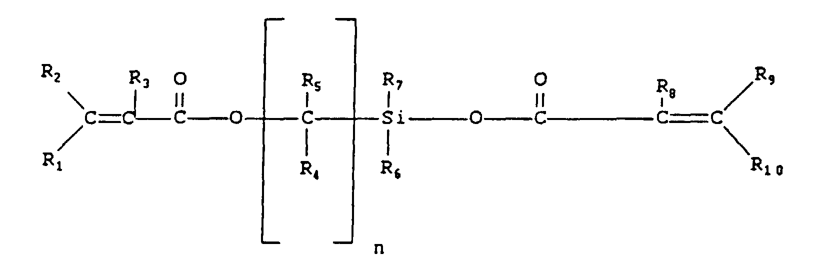 zu ergeben, worin:
R₁, R₂, R₃, R₄, R₅, R₆, R₇, R₈, R₉ und R₁₀ unabhängig Wasserstoff-, Halogen-, C₁-C₈-Alkyl- oder Phenylreste sind und n eine ganze Zahl mit einem Wert von 1 bis 4 ist, und
(ii) die nichthydrolysierende Umsetzung der Silyldiacrylatverbindung mit einem Silicon, das wenigstens eine Funktionalität besitzt, welche mit einer Acryloxyfunktionalität der Silyldiacrylatverbindung reaktiv ist, um ein acryloxyfunktionelles verkapptes Silicon als die Siliconzusammensetzung zu ergeben, wobei das acryloxyfunktionelle verkappte Silicon mit verkappenden Resten der Formel: 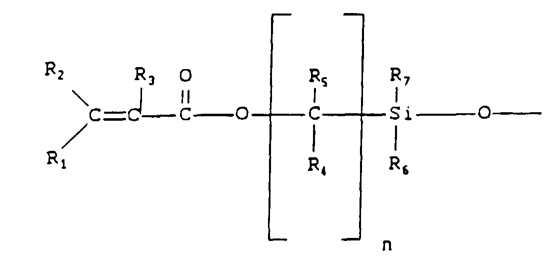 verkappt ist, worin:
R₁, R₂, R₃, R₄, R₅, R₆, R₇ wie oben definiert sind.

16. Photogehärtetes Produkt, das gebildet wird, indem das photohärtbare Silicon oder die photohärtbare Siliconzusammensetzung, welche in irgendeinem der Ansprüche 3 bis 12 erhalten wurden, Strahlungsbelichtungsbedingungen ausgesetzt wird, welche dessen Härtung bewirken.

17. Gehärtetes Silicon, das gebildet wird, indem die in irgendeinem der Ansprüche 3 bis 12 erhaltene Zusammensetzung der Photohärtung durch Belichtungsbedingungen, welche deren Härtung bewirken, und durch zusätzliche Härtungsbedingungen, welche deren weitere Härtung bewirken, unterworfen wird, um eine vollständig gehärtete Siliconzusammensetzung zu erzeugen.

18. Verfahren zur Bildung einer verkappenden Zusammensetzung, die acryloxyverkappende Funktionalität und nichtpolymerisierbare verkappende Funktionalität besitzt, umfassend die Umsetzung von:
(a) einer ersten Säure, ausgewählt aus Acrylsäure oder Acrylsäure-derivaten,
(b) einer zweiten Säure, ausgewählt aus Carbonsäuren oder Carbonsäurederivaten, wobei die zweite Säure frei von jeglicher acrylischer oder anderer polymerisierbarer Funktionalität ist, und
(c) einer Chlorsilanverbindung der Formel: 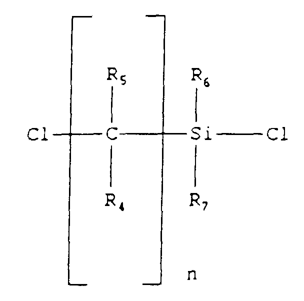 worin:
R₄, R₅, R₆ und R₇ unabhängig ausgewählt sind aus Wasserstoff-, Halogen-, C₁-C₈-Alkyl- und Phenylresten und n eine ganze Zahl von 1 bis 4 ist,
unter dafür wirksamen Reaktionsbedingungen, um die genannte verkappende Zusammensetzung als das Reaktionsprodukt zu ergeben.

19. Siliconzusammensetzung, umfassend:
(i) ein erstes Silan der Formel: 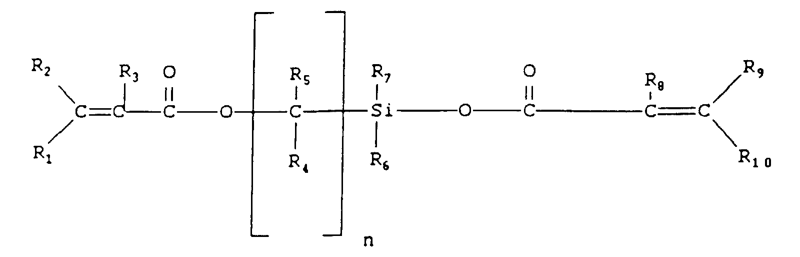 worin:
R₁, R₂, R₃, R₄, R₅, R₆, R₇, R₈, R₉ und R₁₀ unabhängig Wasserstoff-, Halogen-, C₁-C₈-Alkyl- oder Phenylreste sind und n eine ganze Zahl mit einem Wert von 1 bis 4 ist, und
(ii) ein zweites Silan der Formel: 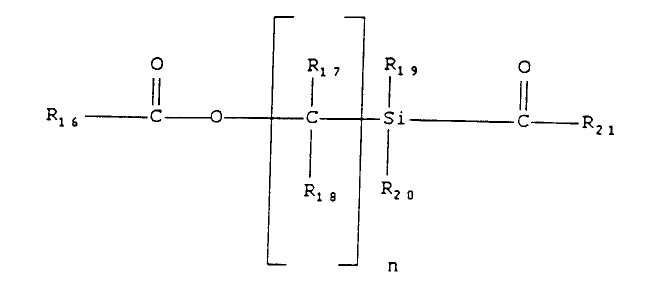 worin:
R₁₆ und R₂₁ nichtpolymerisierbare Gruppen und unabhängig Halogen-, C₁-C₈-Alkyl- oder Phenylreste sind,
R₁₇, R₁₈, R₁₉ und R₂₀ unabhängig Wasserstoff-, Halogen-, C₁-C₈-Alkyl- oder Phenylreste sind und
n eine ganze Zahl mit einem Wert von 1 bis 4 ist, und
(iii) ein Polysiloxan mit wenigstens zwei funktionellen Gruppen pro Molekül, mit denen die ersten und zweiten Silane verkappend reaktiv sind,
wobei:
(a) das erste und zweite Silan zusammen in einer ausreichenden Menge relativ zu dem genannten Polysiloxan bereitgestellt werden, um mit im wesentlichen allen verkappend reaktiven funktionellen Gruppen des Polysiloxans zu reagieren, und
(b) das erste Silan etwa 50 Gew.-% bis 98 Gew.-% des Gesamtgewichts aus dem ersten und dem zweiten Silan ausmacht.

20. Zusammensetzung nach Anspruch 19, die zusätzlich umfaßt:
(iv) ein drittes Silan der Formel: 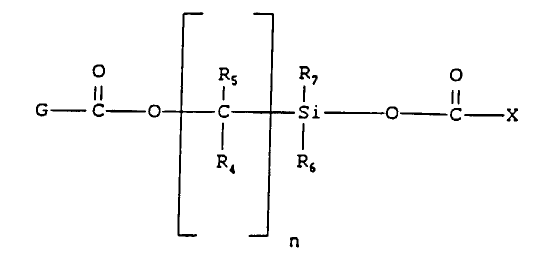 worin:
R₄, R₅, R₆ und R₇ die gleichen Bedeutungen wie in der ersten Silanformel haben,
eine der G- und X-Gruppen 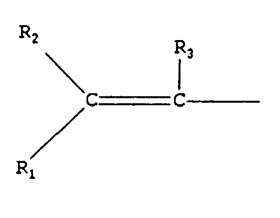 ist,
worin:
R₁, R₂ und R₃ die gleichen Bedeutungen haben wie in der ersten Silanformel und die andere der G- und X-Gruppen R₁₆ ist mit der gleichen Bedeutung wie in der zweiten Silanformel.

## Revendications

1. Un procédé de coiffage de silicone, consistant à faire réagir :
(i) un diacrylate de silyle de la formule : 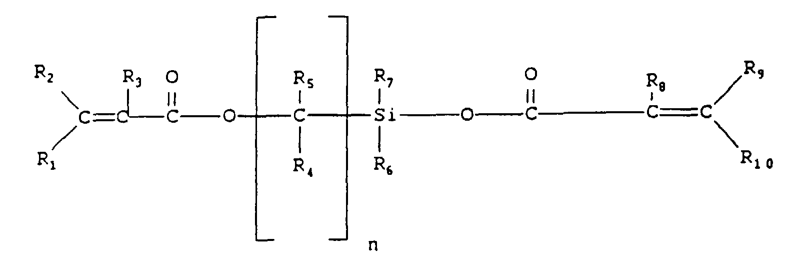 où ;
R₁, R₂, R₃, R₄, R₅, R₆, R₇, R₈, R₉ et R₁₀ sont indépendamment l'hydrogène, un halogène, un radical alkyle en C₁-C₈ ou phényle ; et n est un nombre entier ayant une valeur de 1 à 4 ; avec :
(ii) une silicone ayant au moins une fonctionnalité qui est réactive avec ledit diacrylate de silyle pour produire une silicone coiffée ayant des fragments de coiffage de la formule : 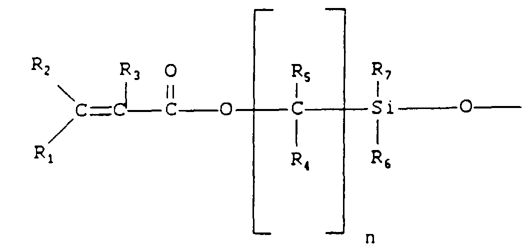 liés à la silicone, où R₁, R₂, R₃, R₄, R₅, R₆, R₇ et n sont tels que définis ci-dessus.

2. Un procédé de coiffage de silicone selon la revendication 1, dans lequel le diacrylate de silyle est amené à réagir sans hydrolyse avec la silicone.

3. Un procédé de coiffage de silicone tel que revendiqué dans la revendication 2, dans lequel la silicone possède :
(a) une fonctionnalité qui est réactive avec une fonctionnalité acryloxy dudit diacrylate de silyle pour produire ladite silicone coiffée, dans laquelle lesdits fragments de coiffage ont la formule : 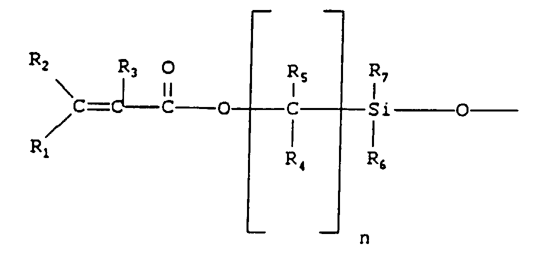 où :
R₁, R₂, R₃, R₄, R₅, R₆, R₇ sont tels que définis ci-dessus,
ladite silicone coiffée étant partiellement durcissable dans des premières conditions de durcissement comprenant une exposition à un rayonnement efficace pour un durcissement, facultativement en présence d'un photo-initiateur ; et
(b) une autre fonctionnalité qui rend ladite silicone coiffée partiellement durcissable par des secondes conditions de durcissement différentes de l'exposition au rayonnement efficace pour un durcissement des premières conditions de durcissement.

4. Un procédé de coiffage de silicone tel que revendiqué dans la revendication 3, dans lequel ladite autre fonctionnalité est une fonctionnalité :
vinyle ;
hydrogène ;
énoloxy ;
alcoxy ;
aryloxy ;
oxime ;
-OOCR₃₃ ;
N,N-dialkylamino ;
N,N-dialkylaminoxy ;
N-alkylamido ;
-O-NH-C(O)-R₃₃ ; 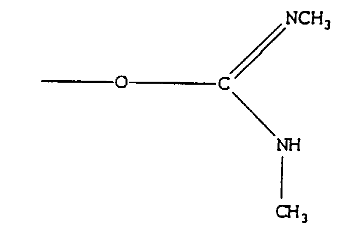
-O-C(CH₃)=CH₂ ; ou
-S-C₃H₆Si(OCH₃)₃ ;
où R₃₃ est H ou un radical hydrocarbyle.

5. Un procédé de coiffage de silicone tel que revendiqué dans la revendication 4, dans lequel ladite fonctionnalité de silicone (b) est choisie parmi les fonctionnalités méthoxy, oxime et acétoxy.

6. Un procédé de coiffage de silicone tel que revendiqué dans la revendication 3, dans lequel ladite fonctionnalité de silicone (b) comprend une fonctionnalité silanol, et ladite fonctionnalité silanol est amenée à réagir avec un corps co-réagissant comprenant un silane de la formule : 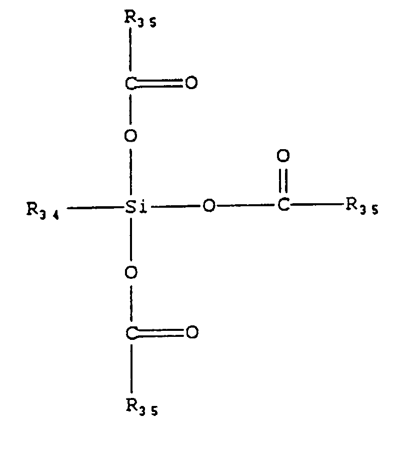
R₃₄ est un radical alkyle en C₁-C₈ ou 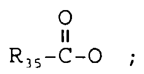 et
chaque R₃₅ est indépendamment l'hydrogène ou un radical alkyle en C₁-C₈.

7. Un procédé de coiffage de silicone tel que revendiqué dans l'une quelconque des revendications 3 à 6 ou une composition telle que revendiquée dans la revendication 19 ou 20, dans lesquels R₁, R₂, R₃, R₄, R₅, R₈, R₉ et R₁₀ sont indépendamment l'hydrogène, un halogène, un radical alkyle en C₁-C₈ ou phényle.

8. Un procédé de coiffage de silicone ou une composition tels que revendiqués dans la revendication 7, dans lesquels :
R₁, R₂, R₉ et R₁₀ sont de l'hydrogène ;
R₃, R₄, R₅ et R₈ sont indépendamment l'hydrogène ou un radical alkyle en C₁-C₈ ;
R₆ et R₇ sont indépendamment un radical alkyle en C₁-C₈ ou phényle ; et
n est 1.

9. Un procédé de coiffage de silicone ou une composition tels que revendiqués dans la revendication 8, dans lesquels :
R₁, R₂, R₄, R₅, R₉ et R₁₀ sont de l'hydrogène ;
R₃ et R₈ sont indépendamment l'hydrogène ou un radical méthyle ;
R₆ et R₇ sont des radicaux méthyle ; et
n est 1.

10. Un procédé de coiffage de silicone ou une composition tels que revendiqués dans la revendication 9, dans lesquels ledit diacrylate de silyle (i) répond à la formule : 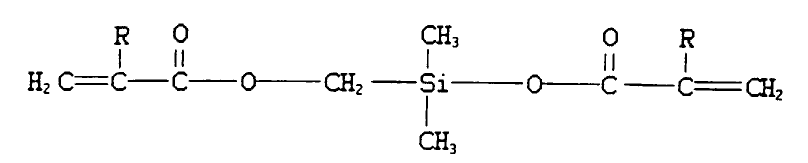 où :
R est H ou un radical méthyle.

11. Un procédé de coiffage de silicone ou une composition de silicone tels que revendiqués dans l'une quelconque des revendications 3 à 10 ou 19 ou 20, dans lesquels ladite fonctionnalité de silicone qui est réactive avec la fonctionnalité acryloxy du diacrylate de silyle est une fonctionnalité choisie parmi :
-OH ;
-N(R')₂ où chacun des substituants R' est choisi indépendamment parmi l'hydrogène, les radicaux alkyles en C₁-C₈ et phényle, avec la condition qu'au moins un substituant R' soit l'hydrogène ;
-SH ;
-SO₃H ; ou,
lorsque le diacrylate de silyle est présent avec des groupes acide acrylique résiduels, 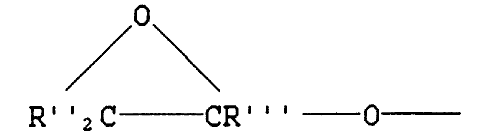 où chacun des substituants R" et R"' est indépendamment l'hydrogène ou un radical alkyle en C₁-C₈ ou phényle.

12. Un procédé de coiffage de silicone ou une composition de silicone tels que revendiqués dans l'une quelconque des revendications 3 à 11, qui comprennent une quantité efficace d'un photo-initiateur choisi parmi la benzophénone, la benzoïne, l'acétophénone, le benzile et leurs formes substituées, ou un mélange d'entre eux.

13. Un procédé de coiffage de silicone selon la revendication 2, dans lequel la silicone ayant une fonctionnalité contenant de l'hydrogène actif est amenée à réagir sans hydrolyse avec une fonctionnalité acrylique pour produire une silicone coiffée photodurcissable qui est coiffée avec des fragments de coiffage dérivés du diacrylate de silyle, lesdits fragments de coiffage ayant la formule : 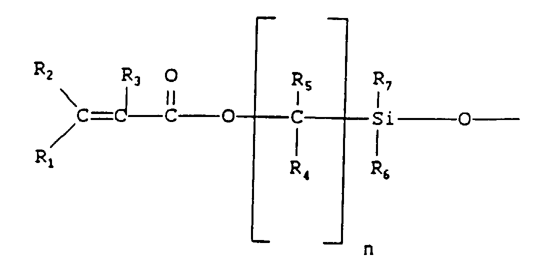 où R₁, R₂, R₃, R₄, R₅, R₆, R₇ sont tels que définis ci-dessus.

14. Un procédé de coiffage de silicone ayant une fonctionnalité contenant de l'hydrogène actif avec (i) une fonctionnalité acrylique pour conférer à la silicone un caractère photodurcissable, et avec (ii) une fonctionnalité non réactive, consistant à faire réagir ladite fonctionnalité contenant de l'hydrogène actif de ladite silicone avec :
(a) un diacrylate de silyle de la formule : 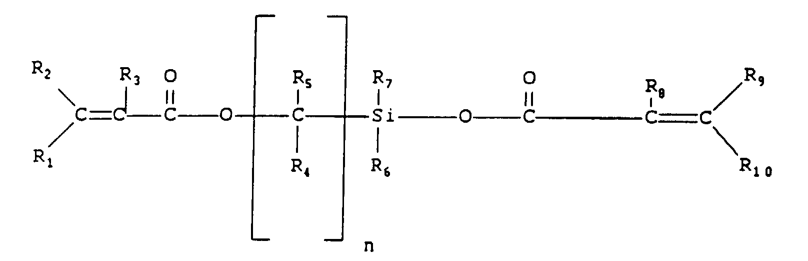 où :
R₁, R₂, R₃, R₄, R₅, R₆, R₇, R₈, R₉ et R₁₀ sont indépendamment l'hydrogène, un halogène, un radical alkyle en C₁-C₈ ou phényle ; et n est un nombre entier ayant une valeur de 1 à 4 ; et
(b) un silane de la formule : 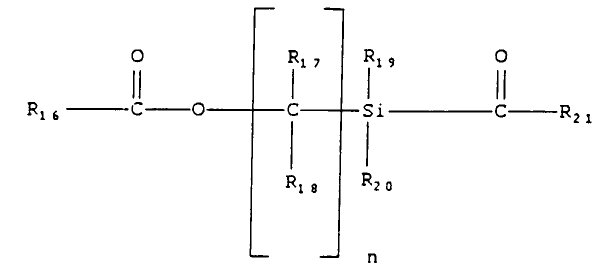 où :
R₁₆ et R₂₁ sont des groupes non polymérisables et sont indépendamment un halogène, un radical alkyle en C₁-C₈ ou phényle ; et
R₁₇, R₁₈, R₁₉ et R₂₀ sont indépendamment l'hydrogène, un halogène, un radical alkyle en C₁-C₈ ou phényle,
pour produire une silicone coiffée dans laquelle 50 % à 98 % de la fonctionnalité contenant de l'hydrogène actif de la silicone sont coiffés par des fragments de coiffage de la formule : 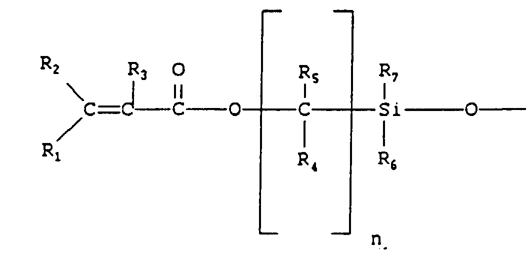 où :
R₁, R₂, R₃, R₄, R₅, R₆, R₇ sont tels que définis ci-dessus, et le reste de la fonctionnalité contenant de l'hydrogène actif de la silicone est coiffé par des fragments de coiffage dérivés dudit silane.

15. Un procédé de fabrication d'une composition de silicone qui est photodurcissable dans des conditions de photodurcissement, facultativement en présence d'un photo-initiateur approprié, consistant à :
(i) faire réagir
(a) un composé du type acide acrylique de la formule : 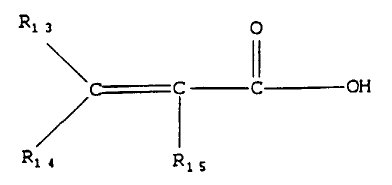 où :
R₁₃, R₁₄ et R₁₅ sont indépendamment l'hydrogène, un halogène, un radical alkyle en C₁-C₈ ou phényle, avec
(b) un chlorosilane de la formule : 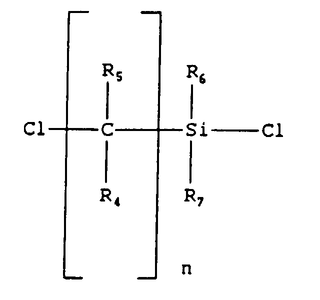 où :
R₄, R₅, R₆ et R₇ sont indépendamment l'hydrogène, un halogène, un radical alkyle en C₁-C₈ ou phényle ; et n est un nombre entier de 1 à 4 ;
pour produire un diacrylate de silyle de la formule : 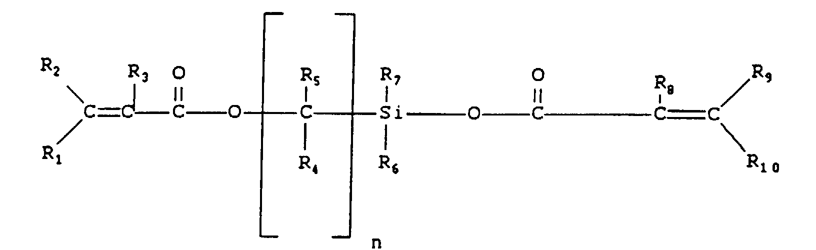 où :
R₁, R₂, R₃, R₄, R₅, R₆, R₇, R₈, R₉ et R₁₀ sont indépendamment l'hydrogène, un halogène, un radical alkyle en C₁-C₈ ou phényle ; et n est un nombre entier ayant une valeur de 1 à 4 ; et
(ii) faire réagir sans hydrolyse le diacrylate de silyle avec une silicone ayant au moins une fonctionnalité qui est réactive avec une fonctionnalité acryloxy du diacrylate de silyle pour produire une silicone coiffée à fonctionnalité acryloxy à titre de la composition de silicone, la silicone coiffée à fonctionnalité acryloxy étant coiffée par des fragments de coiffage de la formule : 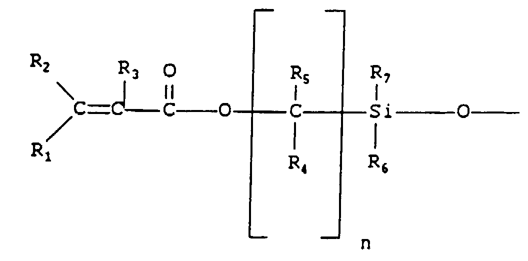 où :
R₁, R₂, R₃, R₄, R₅, R₆, R₇ sont tels que définis ci-dessus.

16. Un produit photodurci formé par exposition de la silicone ou composition de silicone photodurcissable telle qu'obtenue dans l'une quelconque des revendications 3 à 12 à des conditions d'exposition à un rayonnement efficaces pour un durcissement de cette composition.

17. Une silicone durcie formée en soumettant la composition obtenue dans l'une quelconque des revendications 3 à 12 à un photodurcissement par des conditions d'exposition efficaces pour un durcissement de cette composition et à d'autres conditions de durcissement efficaces pour un durcissement supplémentaire de cette composition afin de produire une composition de silicone complètement durcie.

18. Un procédé de formation d'une composition de coiffage contenant une fonctionnalité acryloxy de coiffage et une fonctionnalité non polymérisable de coiffage, consistant à faire réagir :
(a) un premier acide choisi parmi l'acide acrylique ou des dérivés d'acide acrylique,
(b) un second acide choisi parmi les acides carboxyliques ou des dérivés d'acides carboxyliques, le second acide étant dépourvu de toute fonctionnalité polymérisable acrylique ou autre, et
(c) un chlorosilane de la formule : 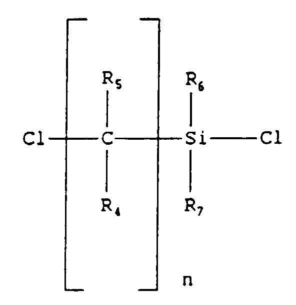 où :
R₄, R₅, R₆ et R₇ sont choisis indépendamment parmi l'hydrogène, un halogène, un radical alkyle en C₁-C₈ et phényle ; et n est un nombre entier de 1 à 4 ;
dans des conditions de réaction efficaces pour ceux-ci afin de produire ladite composition de coiffage comme produit réactionnel.

19. Une composition de silicone, comprenant :
(i) un premier silane de la formule : 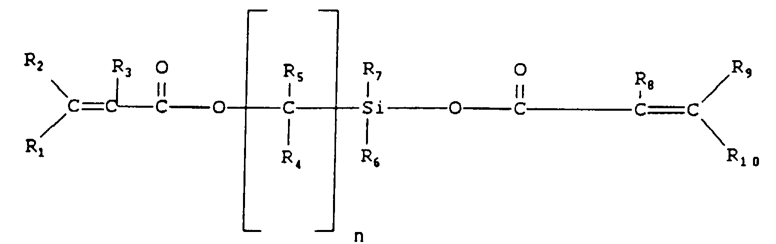 où :
R₁, R₂, R₃, R₄, R₅, R₆, R₇, R₈, R₉ et R₁₀ sont indépendamment l'hydrogène, un halogène, un radical alkyle en C₁-C₈ ou phényle ; et n est un nombre entier ayant une valeur de 1 à 4 ; et
(ii) un second silane de la formule : 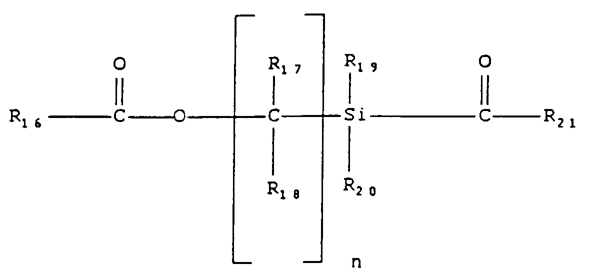 où :
R₁₆ et R₂₁ sont des groupes non polymérisables et sont indépendamment un halogène, un radical alkyle en C₁-C₈ ou phényle ;
R₁₇, R₁₈, R₁₉ et R₂₀ sont indépendamment l'hydrogène, un halogène, un radical alkyle en C₁-C₈ ou phényle ; et
n est un nombre entier ayant une valeur de 1 à 4 ; et
(iii) un polysiloxane ayant au moins deux groupes fonctionnels par molécule avec lequel lesdits premier et second silanes sont réactifs pour un coiffage ;
dans lequel :
(a) les premier et second silanes sont fournis en une quantité totale suffisante par rapport audit polysiloxane pour réagir avec sensiblement tous les groupes fonctionnels du polysiloxane réactifs pour le coiffage ; et
(b) le premier silane représente 50 % à 98 % en poids du poids total des premier et second silanes.

20. Une composition selon la revendication 19, comprenant de plus :
(iv) un troisième silane de la formule : 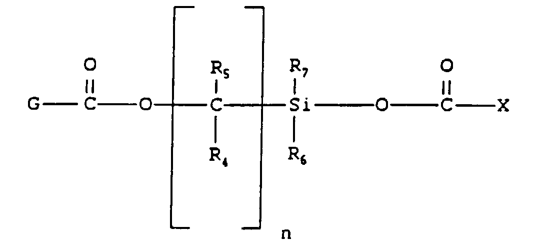 où :
R₄, R₅, R₆ et R₇ ont les mêmes significations que dans la formule du premier silane ;
l'un des groupes G et X est 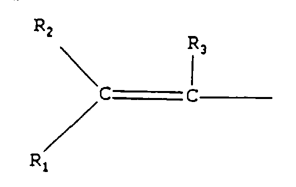 où :
R₁, R₂ et R₃ ont les mêmes significations que dans la formule du premier silane,
et l'autre des groupes G et X est R₁₆ qui a la même signification que dans la formule du second silane.
